# EUROPEAN PATENT APPLICATION

(11) **EP 1 737 222 A2**
(43) Date of publication of application: **27.12.2006**
(21) Application number: 06013008.5
(22) Date of filing: 23.06.2006
(51) Int. Cl.: H04N 5/64

(54) **Audio/Display apparatus**

(30) Priority: 24.06.2005 JP 2005185604; 18.04.2006 JP 2006115045
(71) Applicant: SONY CORPORATION, Tokyo (JP)
(72) Inventor: Suzuki, Takeshi, Sony Corporation, Shinagawa-ku Tokyo (JP); Aizawa, Satoru, Sony Corporation, Shinagawa-ku Tokyo (JP); Nishinosono, Yuji, Sony Corporation, Shinagawa-ku Tokyo (JP); Yoshimura, Naomi, Sony Corporation, Shinagawa-ku Tokyo (JP)
(74) Representative: Körber, Martin Hans

(57) **Abstract**

There is provided an audio/display apparatus (1) that provides a large display (3) and high-power output of an audio signal and is acceptable as one of the room furnishings, which is installed in a most noticeable position in the room. It includes an upper foreign body detecting mechanism (89) provided along the entire top portion of an audio unit, opposite to at least a display unit, to detect a foreign body lodged in a clearance defined between the audio unit and display unit, and a lower foreign body detecting mechanism (90) provided along the entire bottom portion of the audio unit to detect a foreign object caught at the bottom portion of the audio unit having moved to a first position.

## Description

### CROSS REFERENCES TO RELATED APPLICATIONS

The present invention contains subject matter related to Japanese Patent Application JP 2005-185604 filed in the Japanese Patent Office on June 24, 2005 and Japanese Patent Application JP 2006-115045 filed in the Japanese Patent Office on April 18, 2006, the entire contents of which are incorporated herein by reference.

### BACKGROUND OF THE INVENTION

### 1. Field of the Invention

The present invention relates to an audio/display apparatus composed of an audio unit including a speaker unit that outputs an audio signal and a display unit including a liquid crystal display (LCD) or the like to display a television broadcast image information or an image or picture reproduced from video information recorded in a variety of recording media removably loaded in a recorder and/or player, such as a DVD (Digital Versatile Disc), CD (Compact Disc) or the like. The present invention is more particularly directed to an audio/display apparatus in which the audio unit is combined with the display unit freely movably to cover and uncover (not cover) the display screen of the latter.

### 2. Description of the Related Art

As a display unit such as a television receiver, there is already available the liquid crystal display or the like larger in size and smaller in thickness than the cathode-ray tube. Normally, a display unit of this type is installed in a best position for viewing and listening in a room in view of its features, and it is also acceptable as one of the room furnishings. The display unit functions to display a television broadcast image or an image or picture reproduced from video information recorded in a variety of hand-held recording media such as a DVD (Digital Versatile Disc), CD (Compact Disc) or the like (will be referred simply as "recording medium" hereunder).

On the other hand, the audio unit has a function to reproduce an audio signal as in the past and also powerfully reproduce an audio signal synchronously with display of an image on a large screen of a display unit connected to the audio unit, and similar functions. Thus, use of these types of audio and display units in combination makes it possible to reproduce an image also at home with a realistic theater-in-the home effect. Namely, the combination of the audio and display units can realize a so-called home theater.

The above type of audio/display apparatus including an audio unit and display unit in combination may be designed for the audio unit to freely be movable in relation to the display unit as will be described later. In case a relatively large, heavy audio unit included in an audio/display apparatus is to be movable in such a manner, there should be provided a detecting mechanism to detect a foreign body, if any, caught between the audio and display units and stops the audio unit from moving. The mechanism to detect a foreign body being caught between the audio and display units is used in various industrial equipment as disclosed in the Japanese Utility Model Gazette No. 2519141 (will be referred to as "Patent Document 1" hereunder), Japanese Unexamined Utility Model Publication No. 35571 of 1994 (will be referred to as "Patent Document 2" hereunder) and Japanese Utility Model Gazette No. 3018260 (will be referred to as "Patent Document 3" hereunder).

### SUMMARY OF THE INVENTION

The display unit will be installed in a best position for viewing and listening in a room as mentioned above. In case the audio/display apparatus is in use only for audio reproduction, however, the display screen of the display unit, displaying no image thereon, will take the best position for viewing and listening in the room. Namely, the display screen will spoil the atmosphere in the room because it is just a dry dark screen when it is displaying no image. Especially, in case the display unit is larger, this problem will be more serious.

Also, the user of an audio/display apparatus including an audio unit and display unit in combination can enjoy a television broadcast program and information reproduced from a recording medium by viewing an image displayed on the large display screen of the display unit and listening to a realistic audio output from the audio unit. Normally in this type of audio/display apparatus, the display screen is disposed at a height corresponding to the sight line of the user while a speaker is disposed at either lateral side of the display screen to form an appropriate acoustic field.

In the above audio/display apparatus, in case only the audio function thereof is used for listening to only music, for example, the large, dry and tasteless screen located before the user's sight line will spoil the atmosphere of the acoustic space. Also, a larger display unit having a speaker disposed at either lateral side thereof will add to the size of the entire audio/display apparatus. Thus, in case the audio/display apparatus is to be designed smaller in total size, the display screen of the display unit has to be designed smaller and the speakers have to be designed smaller. As the result, it will be difficult to implement any audio/display apparatus enabling viewing of a large image and listening to true-to-life audio in combination.

On this account, it is proposed that in an audio/display apparatus including an audio unit and display unit, the audio unit is combined with the display unit to be movable vertically to a first position where it will not cover the display screen of the display unit and a second position where it will cover the display screen. In the audio/display apparatus thus constructed, however, the audio unit is relatively large and heavy, so that a foreign body, if any, caught somewhere will possibly overload and damage a mechanism that drives the vertical movement of the audio unit. Also, any foreign body lodged between the audio and display units will also possibly damage the display screen.

To avoid the above possible problems, this type of audio/display apparatus should also include a mechanism which is provided in an industrial equipment to detect a foreign body being caught. As having been mentioned above, however, the audio/display apparatus is acceptable as one of the room furnishings and thus the appearance thereof should not be spoiled by the foreign-body detecting mechanism. Also, the audio/display apparatus should be capable of detecting any foreign body lodged in a position on a relatively large audio unit and stopping quickly the audio unit from moving vertically. Further, in the audio/display apparatus, a foreign body is caught in one manner at the upper portion of the audio unit but in another manner at the lower portion. Therefore, it is difficult to use one foreign-body detecting mechanism in common to detect such a foreign body whether caught at the upper or lower portion of the audio unit. At the center of the audio/display apparatus, there is provided a stand to support the display unit at a predetermined height. A foreign body detecting mechanism should also be provided on this stand to positively detect a foreign body being caught anywhere along the stand.

It is therefore desirable to overcome the above-mentioned drawbacks of the related art by providing an audio/display apparatus including an audio unit and display unit combined with each other in such a manner that the audio unit is vertically movable in relation to the display unit to provide a large display and high power output of an audio signal, and which is acceptable as one of the room furnishings, which is normally installed in a most noticeable position in a room, and has a function to positively detect a foreign body anywhere it is caught.

According to an embodiment of the present invention, there is provided an audio/display apparatus including a display unit mounted on a support frame and an audio unit mounted on a carrier and which performs an audio function and displaying function in combination and has a function to detect a foreign body. More specifically, the audio/display apparatus includes an audio unit incorporating at least a speaker, recording medium loading unit, recording medium playing unit to reproduce information recorder in the recording medium, and an acoustic signal processor to process an audio signal for delivery from the speaker, a display unit incorporating a display screen to display at least a television broadcast image and image reproduced by the recording medium playing unit, and a video signal processor, a support frame to support the display unit fixed thereon, and a carrier having the audio unit mounted thereon and installed on the support frame via a drive mechanism and guide mechanism to be movable.

The audio/display apparatus further includes a first foreign body detecting mechanism provided along the entire top edge of the audio unit, opposite to at least the display unit, and which detects a foreign body lodged in a clearance defined between the top portion of the audio unit and the display unit and a second foreign body detecting mechanism provided along the entire bottom edge of the audio unit to detect a foreign body caught at the bottom of the audio unit.

The audio/display apparatus according to an embodiment of the present invention is acceptable as one of the room furnishings, which is normally installed in a most noticeable position in a room, provides vigorous image and sound by large display and high power output of an acoustic signal and will not spoil the atmosphere in the room since the audio unit is movable vertically to cover the display screen of the display unit when no image is being displayed there.

Also, the foreign body detecting mechanisms are provided in a position where the audio unit and display unit are opposite to each other and a foreign body may possibly be lodged and at the bottom of the audio unit, respectively. If a foreign body is caught in such a position, one of the foreign body detecting mechanisms, corresponding to the position of the foreign body, detects the foreign body and quickly stops the audio unit from moving vertically.

### BRIEF DESCRIPTION OF THE DRAWINGS

FIG. 1 is a perspective view of the audio/display apparatus according to an embodiment of the present invention, showing the audio unit moved down to a first position where it uncovers a liquid crystal display;
FIG. 2 is a front view of the audio/display apparatus, showing the audio unit moved up to a second position where it covers the liquid crystal display;
FIG. 3 is a block diagram of the audio/display apparatus;
FIG. 4 is a plan view of the audio/display apparatus;
FIG. 5 is a side elevation of the audio/display apparatus, showing the audio unit moved to the first position;
FIG. 6 is a fragmentary side elevation of the audio/display apparatus, showing the audio unit moved up to the second position where it covers the liquid crystal display;
FIG. 7 is a rear view of an up/down drive mechanism for the audio unit;
FIG. 8 is a fragmentary plan view of the up/down drive mechanism;
FIG. 9 is also a fragmentary plane view of the up/down drive mechanism;
FIG. 10 is a fragmentary perspective view of the up/down drive mechanism;
FIG. 11 explains the characteristic of a lead screw;
FIG. 12 is a fragmentary sectional view of the lead screw drive mechanism;
FIG. 13 is an exploded perspective view, from rear, of a pivot bearing mechanism to support the carrier on the lead screw;
FIG. 14 is a plan view of the pivot bearing mechanism supporting the carrier;
FIG. 15 is also a plan view of the pivot bearing mechanism supporting the carrier;
FIG. 16 is a side elevation of the pivot bearing mechanism supporting the carrier;
FIG. 17 is a fragmentary side elevation showing a third guide roller mechanism to support the audio unit movably;
FIG. 18 illustrates a first guide roller mechanism, in which FIG. 18A is a side elevation of a first guide roller installed in place, FIG. 18B is a side elevation of a second guide roller installed in place and FIG. 18C is a side elevation of a third guide roller installed in place;
FIG. 19 illustrates a second guide roller mechanism, in which FIG. 19A is a side elevation of a first guide roller installed in place, FIG. 19B is a side elevation of a second guide roller installed in place and FIG. 19C is a side elevation of a third guide roller installed in place;
FIG. 20 illustrates a third guide roller mechanism, in which FIG. 20A is a side elevation of a first guide roller installed in place, FIG. 20B is a side elevation of a second guide roller installed in place and FIG. 20C is a side elevation of a third guide roller installed in place;
FIG. 21 illustrates a fourth guide roller mechanism, in which FIG. 21A is a side elevation of a first guide roller installed in place, FIG. 21B is a side elevation of a second guide roller installed in place and FIG. 21C is a side elevation of a third guide roller installed in place;
FIG. 22 is a plan view showing the relation between a point at which the carrier is supported by the pivot bearing mechanism and the center of gravity of the carrier;
FIG. 23 is a side elevation showing a torque developed at the supporting point when the carrier is supported by the pivot bearing mechanism;
FIG. 24 is a fragmentary front view of the audio/display apparatus according to another embodiment of the present invention;
FIG. 25 is a fragmentary plan view of the up/down drive mechanism;
FIG. 26 is a fragmentary front view of the guide roller mechanism;
FIG. 27 is a fragmentary exploded perspective view of the up/down drive mechanism;
FIG. 28 illustrates foreign body detecting mechanisms provided on the audio unit;
FIG. 29 are fragmentary sectional views of the upper foreign body detecting mechanism, in which FIG. 29A shows the mechanism when in the normal state and FIG. 29B shows the mechanism when it has detected a foreign body;
FIG. 30 is a fragmentary front view of the lower foreign body detecting mechanism;
FIG. 31 explains the construction of the lower foreign body detecting mechanism; and
FIG. 32 explains the detection of a foreign body by the lower foreign body detecting mechanism, in which FIG. 32A explains the detection of a foreign body at the lateral end of the detecting mechanism, FIG. 32B explains the detection of a foreign body at an inner portion of the detecting mechanism and FIG. 32C explains the detection of a foreign body at the central portion of the detecting mechanism.

### DETAILED DESCRIPTION OF THE PREFERRED EMBODIMENTS

The present invention will be described in detail below concerning an audio/display apparatus according to an embodiment thereof with reference to the accompanying drawings. The audio/display apparatus is generally indicated with a reference numeral 1.

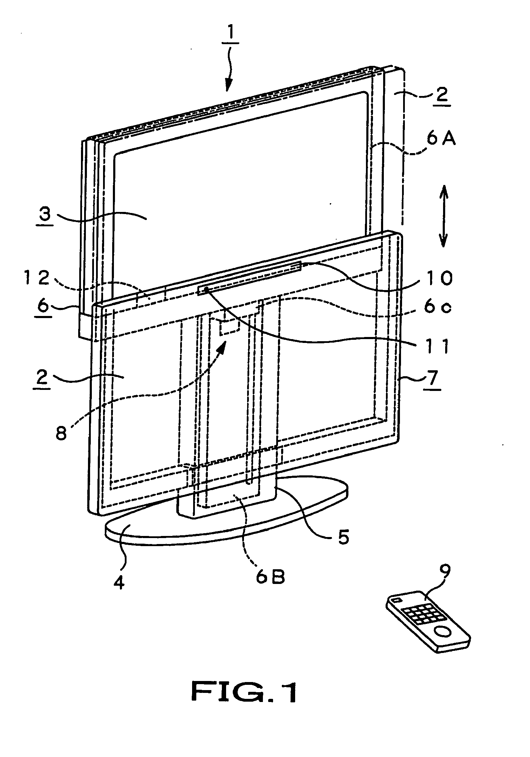

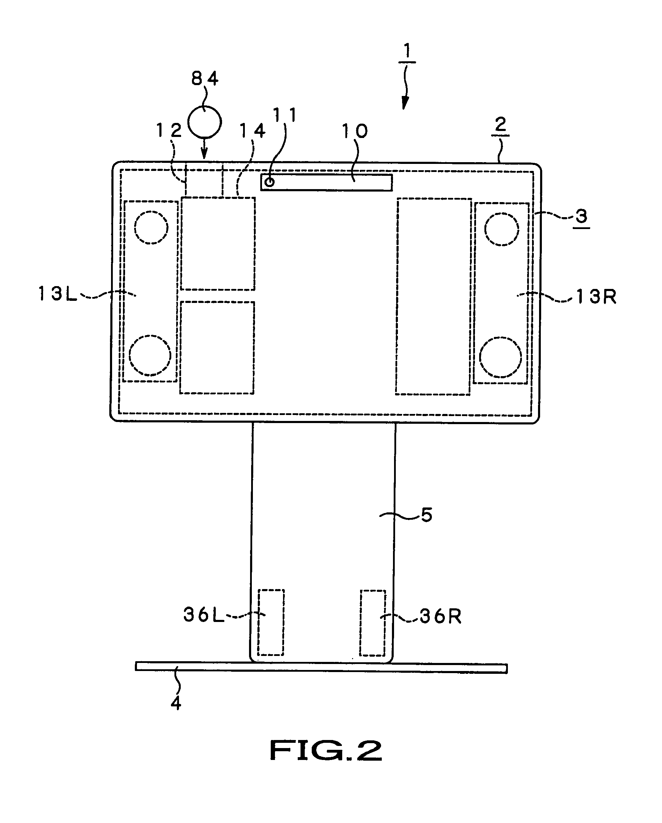

The audio/display apparatus 1 according to the embodiment of the present invention is constructed as one of room furnishings, installed in a best position for viewing and listening in a living room or the like. As shown in FIGS. 1 and 2, the audio/display unit 1 includes an audio unit 2 and display unit 3, constructed independently of each other. It also includes a base 4 having a stand 5 fixed thereon. A support frame 6 is supported on the other end (top) of the stand 5. The support frame 6 includes a frame-shaped body 6A on which the display unit 3 is installed, and a columnar support 6B. The columnar support 6B supports the frame-shaped body 6A and securely fixed to the base 4.

Note that the columnar support 6B of the support frame 6 is disposed inside the stand 5.

The display unit 3 is supported on the frame-shaped body 6A supported on the columnar support 6B having a fixed height. Namely, it is supported at a fixed height from the surface on which the base 4 is installed.

A carrier 7 is supported on the support frame 6 to be movable vertically. The audio unit 2 is installed on the carrier 7. The carrier 7 is vertically moved by an up/down drive mechanism 8 disposed in a drive mechanism retainer 6C provided on the columnar support 6B. The vertical movement of the carrier 7 is made in relation to the support frame 6. It should be noted that the drive mechanism retainer 6C is formed by swelling the front side of the columnar support 6B and has built therein a drive mechanism 85 of the up/down drive mechanism 8.

The audio unit 2 and display unit 3, constructed independently of each other, are fixed to the carrier 7 and support frame 6, respectively, independently of each other. Therefore, the audio unit 2 and display unit 3 included in the audio/display apparatus 1 can be assembled in assembling lines different from each other, respectively. The assembling lines can be arranged most suitably for the audio and display units 2 and 3, respectively. That is, the assembling lines can be streamlined for an improved reliability of finished products as well as reduction of the manufacturing costs.

Also, when either the audio unit 2 or the display unit 3 has to be inspected or repaired, only the unit in question can be removed from the carrier 7 or support frame 6, which leads to streamlining of the maintenance and inspection procedure.

Note that the audio unit 2 and display unit 3 assembled together to form the audio/display apparatus 1 are electrically connected to each other via an interconnecting cable and the like.

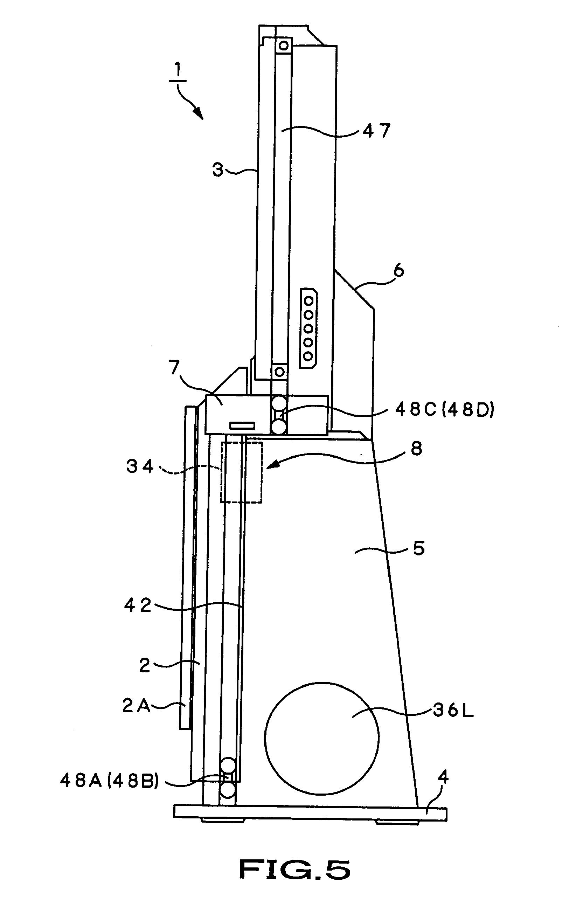

As shown in FIGS. 1 and 5, when the audio unit 2 supported to be moved up or down in relation to the display unit 3 is moved down in relation to the display unit 3 to a first position, it will uncover the display screen of the display unit 3.

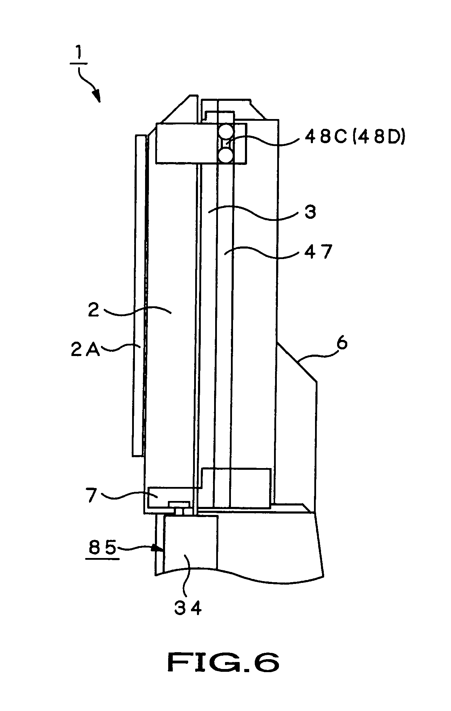

Also, as shown in FIGS. 2 and 6, when the audio unit 2 is moved up to a second position in relation to the display unit 3, it will fully cover the display screen of the display unit 3.

Note that the position of the audio unit 2 in relation to the display unit 3 is changed correspondingly to a selected mode of operation as will be described in detail later.

In the audio/display apparatus 1 according to the embodiment of the present invention, power on/off operation, selection of audio mode, display mode or recording medium mode, volume control and ordinary operation of audio unit and television receiver such as channel selection are made using a remote controller 9. It should be noted that in the audio/display apparatus 1, each of the audio unit 2 and display unit 3 has appropriate operating switches (not shown) provided thereon. In this audio/display apparatus 1, the audio unit 2 is moved vertically with a remote-control signal from the remote controller 9 and also its vertical movement is automatically controlled based on a detection signal from a sensor as will be described in detail later.

The audio unit 2 included in the audio/display apparatus 1 reproduces received radio broadcast sound information, audio information recorded in a recording medium 84, etc. The display unit 3 reproduces, for display, received television broadcast image, video information recorded in the recording medium 84, etc. At this time, the audio unit 2 is supplied with an audio signal from the display unit 3 and reproduces the audio signal.

As shown in FIGS. 1 and 2, the audio unit 2 is formed to have a rectangular shape long from side to side and a size large enough to fully cover the front side of the display unit 3 when moved up to the front side of the display unit 3. The audio unit 2 has provided at the top central portion thereof a display 10 and a photodetector 11 to receive a remote-control signal. The display 10 indicates a time, calendar, power on/off state, selected mode of operation, sound volume level, etc. The photodetector 11 receives a remote-control signal from the remote controller 9.

In the top surface of a housing of the audio unit 2, there is provided a slot 12 through which a recording medium 84 is to be loaded into a recording medium drive 14 incorporated in the audio unit 2. It should be noted that only one slot 12 is shown for the simplicity of illustration and explanation but a plurality of slots 12 may be formed for loading a plurality of types of recording media 84 different in size from each other, respectively. Also, the slot 12 may be formed in a lateral surface of the housing depending upon the disposed geometry of the recording medium drive 14 in the audio unit 2.

At the right and left sides of the housing of the audio unit 2, there are provided a right-channel speaker 13R and left-channel speaker 13L, respectively, for a stereo reproduction of audio signals.

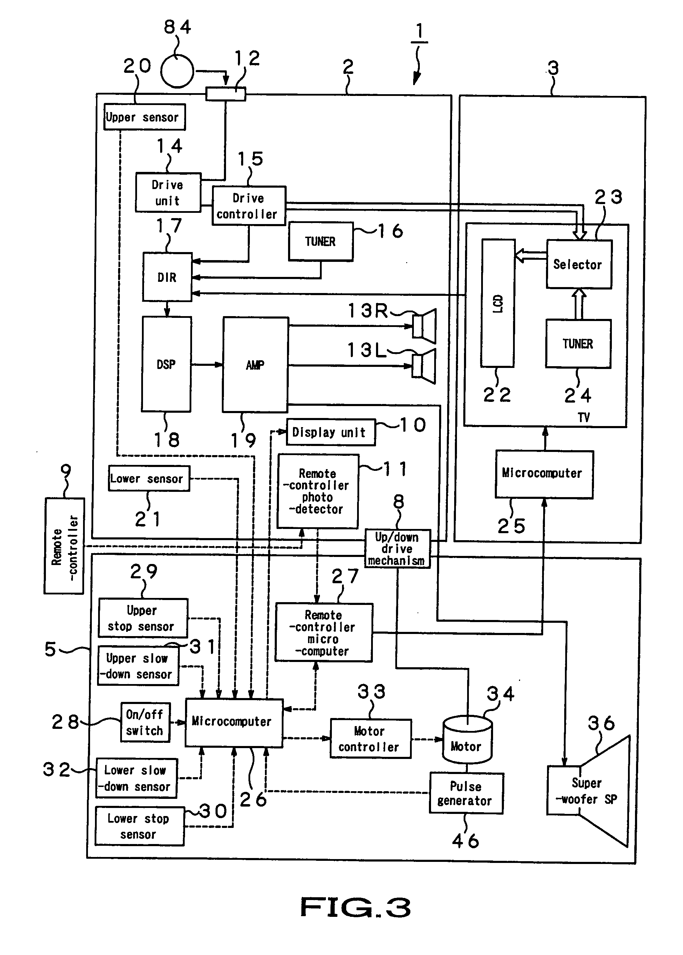

Also, the audio unit 2 has built therein the recording medium drive 14 that drives a recording medium 84 loaded through the slot 12 to reproduce audio and video information recorded in the recording medium 84, drive controller 15 for the drive 14 and a tuner 16 for reception of radio broadcast etc. as shown in FIG. 3.

Further, the audio unit 2 incorporates an input selector/decoder (DIR) 17 to select one of the drive controller 15, tuner 16 or display unit 3 as a source of audio signals and process a selected audio signal in a predetermined manner, sound image correction circuit (DSP) 18 to adjust the position of a sound image vertically with the audio unit 2 being set in a first position and second position, respectively, for an optimum output from the speakers 13R and 13L, amplifier 19 supply an audio signal output from the DSP 18 at a predetermined level to the speakers 13R and 13L.

The audio unit 2 is moved vertically by the up/down drive mechanism 8 in relation to the display unit 3. However, a foreign body 71 or the like, if any, caught between the audio and display units 2 and 3 while the audio unit 2 is being moved vertically will possibly damage the components of the apparatus 1. To detect such a foreign body 71 being caught as will be described in detail later, the housing of the audio unit 2 has an upper sensor 20 provided at the top thereof and a lower sensor 21 at the bottom of the housing. When any of these upper and lower sensors 20 and 21 detects a foreign body 71 being caught, the audio unit 2 is immediately stopped from being moved vertically.

Also, a front sheet 2A is installed on the front side of the housing of the audio unit via an appropriate holding structure as shown in FIG. 5. The front sheet 2A is formed from a lightweight saran net or the like which will not have any influence on the sound emission from the speakers 13R and 13L and of which the thickness is sufficient to make the inside of the audio unit 2 invisible from outside. Also, the front sheet 2A may appropriately be colored or patterned or may have an appropriate figure attached thereon so as to be harmonious with the atmosphere in the room. When the audio unit 2 is moved to the second position where it covers the front side of the display unit 3, the front sheet 2A will be just a decoration of the audio/display apparatus 1.

On the other hand, the display unit 3 will not be described in detail. It is generally equal in functionality to the ordinary television receiver sets. Also, it is connectable with the audio unit 2. The display unit 3 uses a liquid crystal display 22 of a thin structure with a screen of several tens inches in size. It should be noted that the display unit 3 may use an appropriate other type of thin and large-screen display such as plasma display, not the liquid crystal display 22.

As shown in FIG. 3, the display unit 3 has built therein a selector 23 to select read information output from the drive controller 15 in the audio unit 2. Also, the display unit 3 incorporates a tuner 24 to receive a television broadcast program. Information in a received broadcast program is supplied to the selector 23. In the display unit 3, video information selected by the selector 23 is supplied to the liquid crystal display 22 and an image is displayed on the screen of the display 22, and an audio signal included in the video information is supplied to the input selector/decoder 17 in the audio unit 2.

Also, the display unit 3 has installed therein a microcomputer 25 to control the operations of other control circuits and functional circuits (not shown). The microcomputer 25 is supplied with control signals supplied from various operating switches provided on an operation unit (not shown) and a remote-control signal sent from the remote controller 9, processes the supplied signals and outputs a control signal to each of the apparatus components.

Note that the screen of the liquid crystal display 22, not in operation, is just a dry and tasteless dark screen which will spoil the atmosphere in the room. If the display screen is larger, this problem will be more serious. On this account, when the display unit 3 is not in operation, the audio unit 2 is moved up to the second position before the display unit 3 to cover the front side of the liquid crystal display 22. Thus, the front sheet 2A of the audio unit 2 will take a most noticeable position and improve the appearance of the apparatus as a whole.

Note here that in the display unit 3 turned on, the power circuit etc. develop a fever while the liquid crystal display 22 is displaying an image. On the other hand, the liquid crystal display 22 has the liquid crystal thereof influenced by a heat from the display screen, resulting in a distortion of the image. In the audio/display apparatus 1, if the display screen, displaying an image, of the liquid crystal display 22 is covered with the audio unit 2, the heat will accumulate between the audio unit 2 and display unit 3 to result in a high temperature which will influence the liquid crystal display 22. The display quality will thus be deteriorated. When the display unit 3 is set for a mode in which the liquid crystal display 2 is to display an image, the audio unit 2 is controlled not to be moved up to the second position but to be held in the first position where it will not cover the display screen of the liquid crystal display 22.

In the audio/display apparatus 1, the support frame 6 is constructed to have a sufficient mechanical strength to support directly the relatively heavy display unit 3 and the audio unit 2 on the carrier 7. It is fixed to the base 4 with the columnar support 6B thereof installed upright inside the stand 5.

Also, in the stand 5, there are laid wires for electrical connection between the audio unit 2 and display unit 3 and also provided the control circuits, power circuit and up/down drive mechanism 8, etc. The stand 5 has built therein a microcomputer 26 to control all the control operations and a remote-controller microcomputer 27 to process a remote-control signal sent from the remote controller 9 and detected by the photodetector 11 as shown in FIG. 3.

Further the stand 5 has provided therein, an operating switch unit 28 having a main power switch and sound volume control or various switches, which are to be operated manually, which will be described in detail later. Moreover, the stand 5 has provided therein an upper stop sensor 29 and lower stop sensor 30, which control the operation of the up/down drive mechanism 8 for moving the audio unit 2 vertically, and upper and lower slow-down sensors 31 and 32. Further the stand 5 has provided therein a motor controller 33 and drive motor 34 included in the up/down drive mechanism 8, and also a pulse generator 46 to detect the running condition of the drive motor 34.

The upper stop sensor 29 is actuated by the carrier 7 having been moved up to a predetermined position and sends a detection signal to the microcomputer 26 to stop the drive motor 34. The lower stop sensor 30 is actuated by the carrier 7 having been moved down to a predetermined position and sends a detection signal to the microcomputer 26 to stop the drive motor 34. The upper slow-down sensor 31 is actuated by the carrier 7 having been moved up to a predetermined position and sends a detection signal to the microcomputer 26 to lower the moving speed of the carrier 7 by slowing the drive motor 34 down. Also, the lower slow-down sensor 32 is actuated by the carrier 7 having been moved down to a predetermined position and sends a detection signal to the microcomputer 26 to lower the moving speed of the carrier 7 by slowing the drive motor 34 down.

In the audio/display apparatus 1 according to the embodiment of the present invention, the above-mentioned sensors 29 to 32 can positively stop the carrier 7 with no shock in the predetermined positions by slowing the carrier 7 down before stopping.

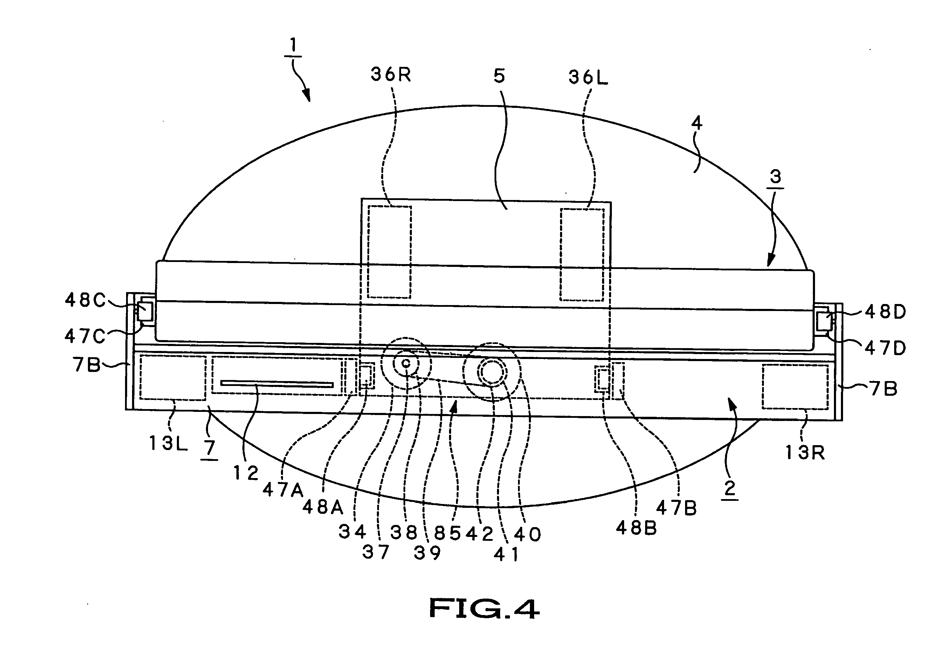

As shown in FIGS. 2 and 4, the stand 5 has built therein a pair of right and left super woofers 36R and 36L disposed with their respective sound emitting parts being directed laterally of the stand 4. The super woofers 36 reproduce audio signals in a low-frequency band. They form together with the pair of speakers 13R and 13L incorporated in the audio unit 2 a dynamic speaker system that reproduces audio signals, of which the frequencies are in a wide frequency band from low to high, with a good characteristic of sound reproduction. The pair of super woofers 36R and 36L are large and heavy as compared with the components of the audio unit 2, such as the speakers 13R and 13L. However, since they are provided inside the stand 5, the audio unit 2 itself can have a reduced weight.

As shown in FIG. 3, the above-mentioned components are selectively provided in the audio unit 2, display unit 3 and stand 5. However, the audio/display apparatus 1 is not limited to such disposition of the components. Basically in this embodiment, a commercially available liquid crystal display 22 is used generally as it is in the display unit 3. However, the audio and display units 2 and 3 may be adapted to share the functions between them.

For example, when the audio/display apparatus 1 is set for a predetermined mode of operation by operating the remote controller 9, the up/down drive mechanism 8 is put into action to move the audio unit 2 vertically in relation to the display unit 3. When the audio/display apparatus 1 is set for a power-off mode, a radio broadcast reception mode or a sound reproduction mode in which an audio signal from a recording medium 84 is to be reproduced, the audio unit 2 is moved to the second position where it will cover the front side of the display unit 3. It should be noted that the audio/display apparatus 8 may be adapted to move the audio unit 2 down to the first position by operating the remote controller 9.

Also the audio/display apparatus 1 is set for a television broadcast reception mode in which an image or the like is to be displayed on the liquid crystal display 22 or a image reproduction mode in which video information from the recording medium 84 is to be reproduced, the audio unit 2 staying in the second position (upper position) in which it is covering the front side of the display unit 3 is moved down to the first position where it will uncover the front side of the display unit 3. In case the audio/display apparatus 1 is in the display function mode in which the liquid crystal display 22 displays an image as above, even if an instruction for upward movement of the audio unit 2 is given by operating the remote controller 9, it will be canceled. Therefore, when the display unit is in operation, the audio unit 2 is limited from being moved to the second position where it will be superposed on the display unit 3, so that heat is prevented from accumulating between the audio unit 2 and display unit 3 and hence the liquid crystal display 22 is prevented from being adversely affected by such accumulated heat.

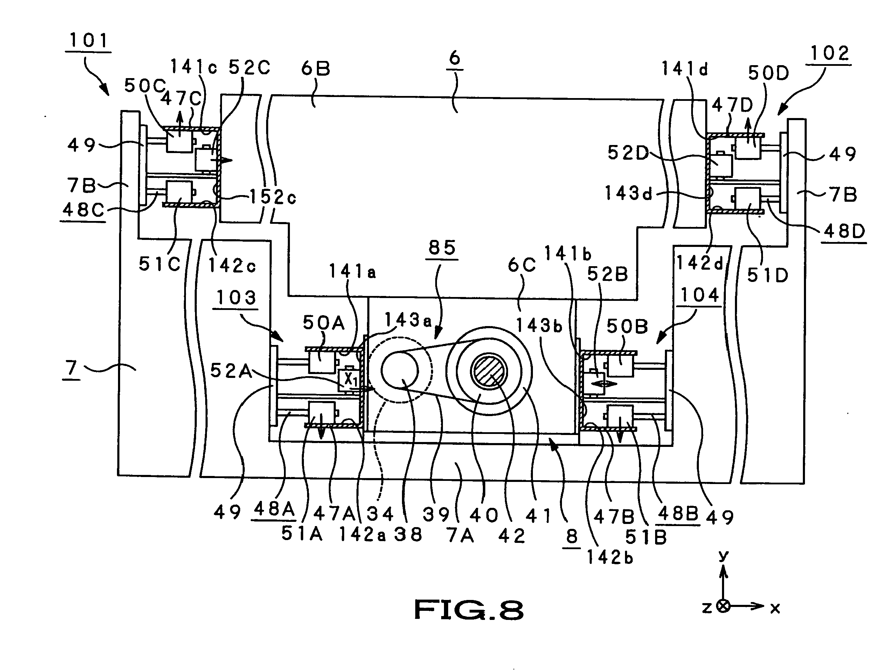

As having previously been described, the stand 5 has provided therein the drive mechanism 85 to drive the up/down drive mechanism 8 that moves the audio unit 2 vertically. Namely, the up/down drive mechanism 8 includes the drive mechanism 85 and a plurality of guide rollers 48 to smoothly move the carrier 7 up and down. As shown in FIGS. 4 and 8, the drive mechanism 85 is disposed inside the columnar support 6B of the support frame 6 and on the drive mechanism retainer 6C projecting downward oppositely to a projected area (corresponding to the profile) of the audio unit 2. That is, the up/down drive mechanism 8 is constructed for the drive mechanism 85 to be housed in the audio unit 2 when the carrier 7 is down in the first position.

Since the drive mechanism 85 is provided within the protected area of the audio unit 2, the audio/display apparatus 1 can be designed smaller. Since the drive mechanism 85 is disposed inside the stand 5, it will not spoil the appearance of the audio/display apparatus 1 as a whole, can be prevented from catching a foreign body or the like and move the audio unit 2 up and down safely.

Also, the audio unit 2 is driven by the drive mechanism 85 including a guide roller mechanism 48 which will be described in detail later to move up and down smoothly and with limited operating noise.

In this audio/display apparatus 1, the drive mechanism 85 of the up/down drive mechanism 8 provided in the support frame 6 is provided inside the stand 5 as above. As shown in FIGS. 4 and 6, a part of the stand 5 is inside the carrier 7 and moved up and down by the up/down drive mechanism 8. As shown in FIG. 8, the carrier 7 includes a frame-shaped portion 7A formed integrally therewith and a pair of sliding guides 7B are formed across the frame-shaped portion 7A to project toward the support frame 6. The stand 5 is located between the sliding guides 7B in pair. On the opposite inner surfaces of the pair of sliding guides 7B, a guide roller mechanism is provided to support the carrier 7 movably in relation to the support frame 6. The drive mechanism 85 is not visible from outside because it is provided inside the stand 5.

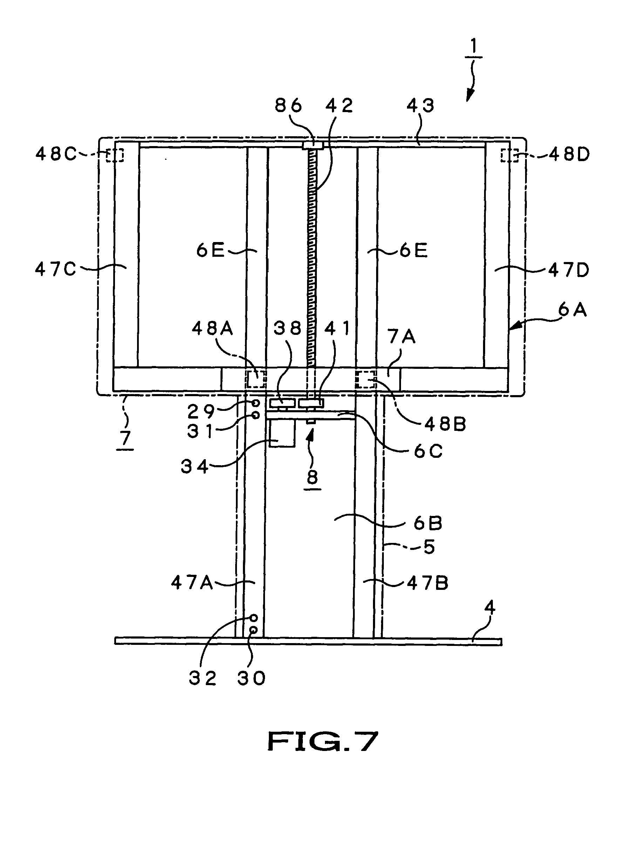

As shown in FIGS. 7 to 9, the drive mechanism 85 is supported on the drive mechanism retainer 6C provided in the support frame 6 and it is disposed inside the stand 5. The drive mechanism 85 includes the drive motor 34 as a drive source, and a drive pulley 38 is fixed to an output shaft 37 of the drive motor 34. The drive mechanism 85 includes, as driven members, a driven belt 39, driven nut 40 having a driven pulley 40A formed integrally therewith, bearing 41 and a lead screw 42. The lead screw 42 is located at the middle of the carrier 7 of the audio unit 2 and supported perpendicularly to the vertical direction in which the audio unit 2 is to be moved.

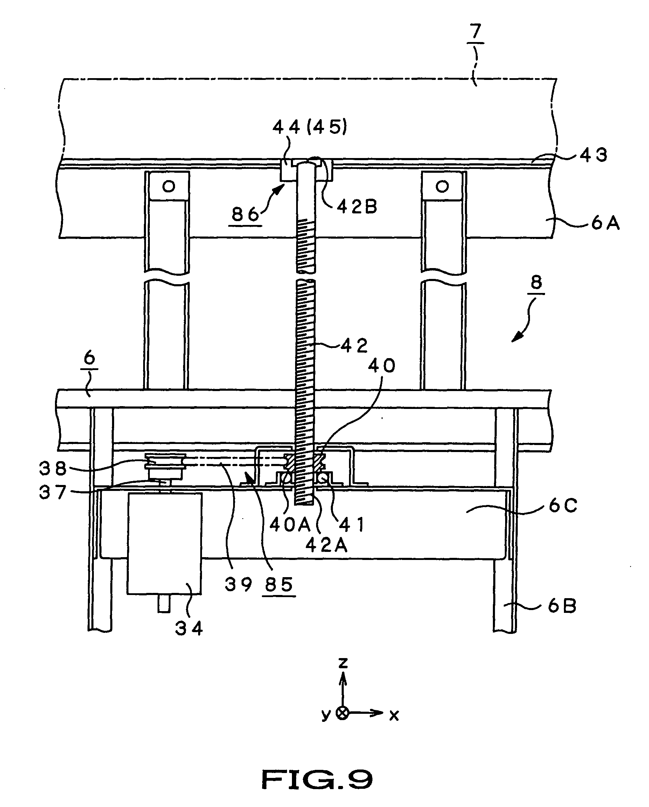

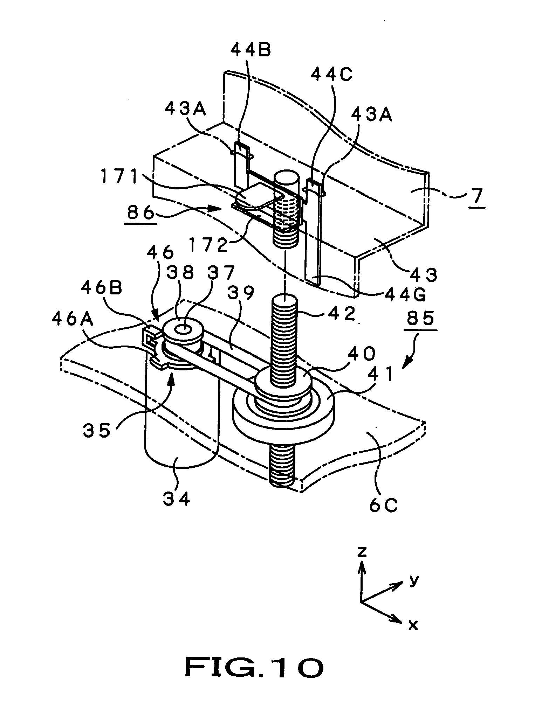

In the drive mechanism 85, the drive motor 34 is controlled by the aforementioned motor controller 33 to run forward or backward to drive the drive pulley 38 forward or backward. Also, in the drive mechanism 85, the driven belt 39 is extended between, and wound on, the drive pulley 38 and driven pulley 40A to transmit the rotation of the drive motor 34 to the driven nut 40 which will thus be rotated. In the drive mechanism 85, a bearing 41 is installed to the drive mechanism retainer 6C of the support frame 6 via a bracket member as shown in FIGS. 9 and 10. The driven nut 40 is supported rotatably on the lead screw 42 via the bearing 41.

In the up/down drive mechanism used to move a predetermined carrier vertically, in case a plurality of lead screws or drive nuts is driven simultaneously, they should be rotated synchronously with each other. On this account, the up/down drive mechanism of this type normally uses a pulley having concavities (and convexities) formed on the periphery thereof and a toothed belt having convexities (and concavities) formed the surface thereof where the pulley and belt are in mesh with each other. In the drive mechanism constructed as above, the rotation is transmitted by the pulley and drive belt being in engagement at the concavities and convexities thereof with each other. Therefore, no skidding will take place between the pulley and belt, but the engagement between the concavities and convexities will cause a large noise and add to the manufacturing costs.

In the drive mechanism 85, since the rotation of the drive motor 34 is transmitted directly to the single driven nut 40 via the driven belt 39, it is not necessary to rotate any plurality of members synchronously with each other. The drive mechanism 85 may use a noiseless V belt or the like as the driven belt 39, which will contribute to a reduced manufacturing cost.

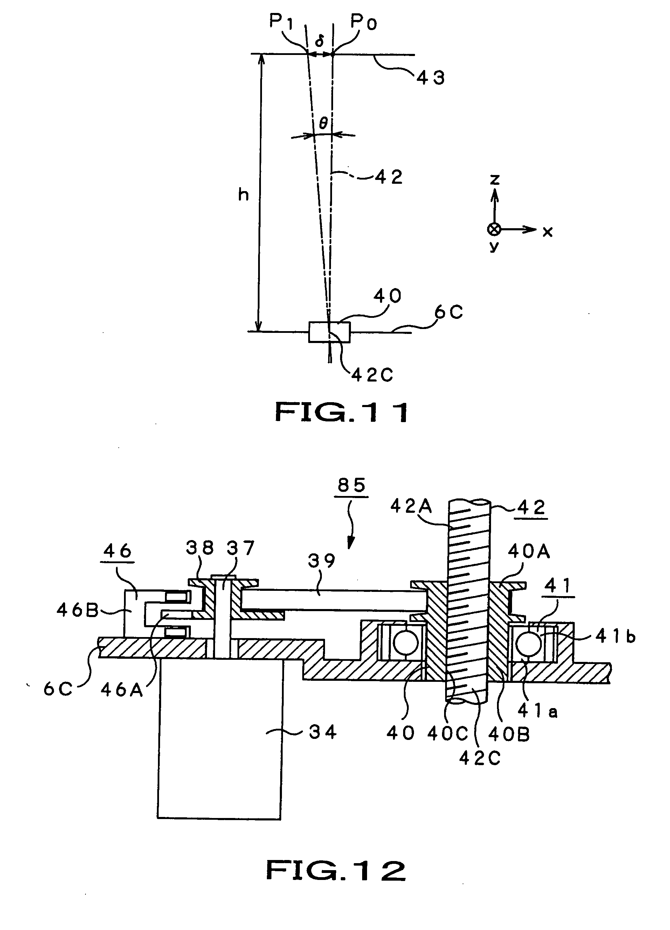

The driven nut 40 is rotatably supported on the lead screw 42 installed to the carrier 7 of the audio unit 2. The driven nut 40 includes a cylindrical base portion 40B and a driven pulley portion 40A formed integrally on the periphery of the cylindrical base portion 40B as shown in FIG. 12. As seen, the driven nut 40 is a so-called driven pulley. The cylindrical base portion 40B has an internally threaded through-hole 40C longitudinally formed therein. The driven nut 40 is rotated by the driven belt 39 driven by the drive motor 34. The driven nut 40 is supported rotatably at the cylindrical base portion 40B thereof in the bearing 41, and the lead screw 42 is passed through the internally threaded through-hole in the drive nut 40.

The lead screw 42 is formed a little longer than a moving distance over which the carrier 7 is moved, namely, a vertical stroke of the audio unit 2 from the first to second position or vice versa. The lead screw 42 has an outside diameter nearly equal to that of the through-hole 40C in the cylindrical base portion 40B of the driven nut 40, and it is externally threaded (indicated at a reference numeral 42A) along the entire length thereof. The external thread 42A of the lead screw 42 is engaged with the internal thread of the through-hole 40C. As the driven nut 40 supported by the drive mechanism retainer 6C of the stationary support frame 6 is rotated by the drive motor 34 via the driven belt 39, the internal thread of the through-hole 40C is rotated in mesh with the external thread 42C of the lead screw 42. Thus, the lead screw 42 is rotated about its axis, and hence the carrier 7 supported on this lead screw 42 is moved up and down along the lead screw 42.

Of the drive mechanism 85, the lead screw 42 is supported at the bottom end portion thereof to the stationary support frame 6 via the driven nut 40 and bearing 41, and at the top end to the movable carrier 7 via the pivot bearing mechanism 86 which will be described in detail later.

The top-end center P1 of the lead screw 42 and that P0 of the driven nut 40 being in mesh with the external thread 42C of the lead screw 42 are positioned in relation to each other depending upon the precision of the carrier 7 and support frame 6. Since the support frame 6 and carrier 7 used in this embodiment are formed each from a combination of many parts, some relative displacement possibly occurs between the support frame 6 and carrier 7. Namely, there will possibly take place a relative displacement δ between the center, at the top end, of the lead screw 42 and that of the driven nut 40 being in mesh with the external thread 42C of the lead screw 42 as shown in FIG. 11.

In the audio/display apparatus 1 according to the embodiment of the present invention, the position of the carrier 7 in relation to the support frame 6 is limited in the x- and y-axial directions by a plurality of guide roller mechanisms 48A to 48D constructed as will be described in detail later as shown in FIGS. 8 to 11, and the carrier 7 is moved vertically with limitation of its swaying about the x-, y- and z-axes.

Note here that the angle of inclination θ of the lead screw 42 varies as the height h changes as the carrier 7 is moved vertically unless there is any displacement δ in relation to the center axis. Therefore, the drive mechanism 85 has to support the lead screw 42 in relation to the support frame 6 and carrier 7 by a structure that will absorb a change of the inclination angle θ. Since the drive mechanism 85 used in this embodiment supports the driven nut 40 rotatably via the bearing 41 as above and there is a small clearance between inner and outer rings 41a and 41b of the bearing 41, the inner and outer rings 41a and 41b is slightly inclinable in relation to each other. Therefore, in the drive mechanism 85, the lead screw 42 on which the driven nut 40 is engaged can be inclined with a certain freedom, from the support frame 6, corresponding to a clearance between the inner and outer rings 41a and 41b of the bearing 41.

Note that in the drive mechanism 85, a top cross-beam member 43 of the carrier 7 is supported at a top end of the lead screw 42 via the pivot bearing mechanism 86. Because of this construction, the weight of the carrier 7 supporting the audio unit 2 is received by the top end 42B of the lead screw 42. More specifically, the weight of the carrier 7 is transmitted from the top end 42B of the lead screw 42 to the driven nut 40 and supported by the drive mechanism retainer 6C of the support frame 6 via the bearing 41 supporting the driven nut 40.

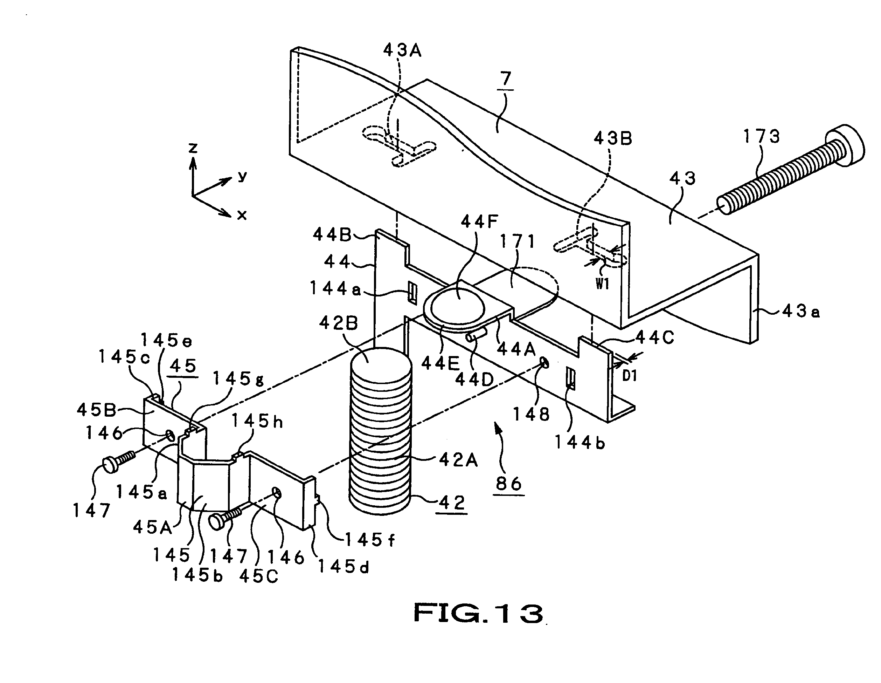

As shown in FIGS. 13, 14, 15 and 16, with the top cross-beam member 43 of the carrier 7 being supported on the top end 42B of the lead screw 42 via the pivot bearing mechanism 86, the drive mechanism 85 follows up a change of the inclination angle θ of the lead screw 42 due to a vertical movement of the carrier 7.

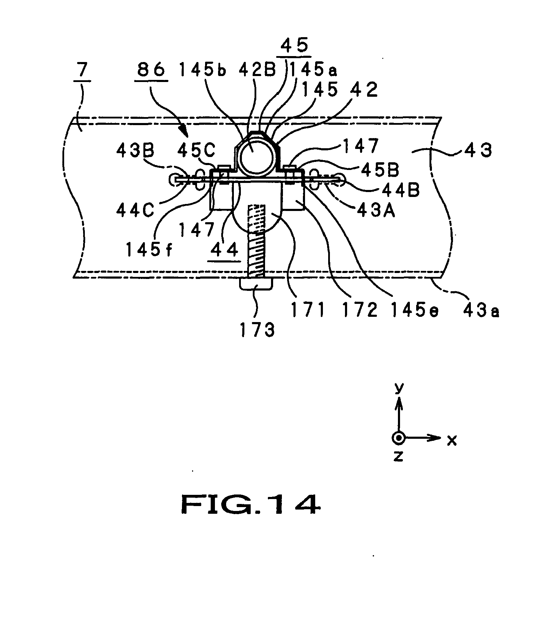

The pivot bearing mechanism 86 via which the top cross-beam member 43 of the carrier 7 is supported on the top end 42B of the lead screw 42 is formed from first and second holder members 44 and 45 as shown in FIGS. 13 and 14.

As shown, the pivot bearing mechanism 86 holds the top-end portion of the lead screw 42 by means of the first and second holder members 44 and 45.

The first holder member 44 has a support portion 44A formed by cutting a material plate for the member 44 and bent to extend horizontally and engagement projections 44B and 44C formed at opposite sides of the support portion 44A. The first holder member 44 has also another engagement projection 44D formed integrally thereon below the support portion 44A. Further, the support portion 44A has formed thereon a holding portion 44F convexed upward to have a generally domed shape.

The first holder member 44 is coupled with the top cross-beam member 43 with the engagement projections 44B and 44C being engaged in engagement holes 43A and 43B, respectively, formed in the top cross-beam member 43. It should be noted that the first holder member 44 is not fixed to the top cross-beam member 43 but it is flexibly coupled to the latter with the engagement projections 44B and 44C being engaged in the engagement holes 43A and 43B, respectively, in the top cross-beam member 43 as shown in FIGS. 13 and 14. More specifically, each of the engagement holes 43A and 43B is formed to have a width W1 a little larger than the thickness D1 of the engagement projections 44B and 44C. Owing to such engagement holes 43A and 43B, the first holder member 44 is pivotable about the x-axis in FIG. 13 in relation to the top cross-beam member 43. Adoption of this construction and the pivot bearing mechanism 86 allows swaying of the lead screw 42 or carrier 7 about the x- and y-axes in FIG. 13 in relation to the carrier 7 or lead screw 42 while the carrier 7 is being moved vertically, which assures a stable vertical movement of the carrier 7.

Note that with assurance of a precise distance W2 between the engagement holes 43A and 43B in pair and precise distance W3 between the opposite surfaces of the engagement projections 44B and 44C in pair, the engagement projections 44B and 44C can precisely be positioned by the engagement holes 43A and 43B, respectively, in the x-axial direction as in FIG. 14.

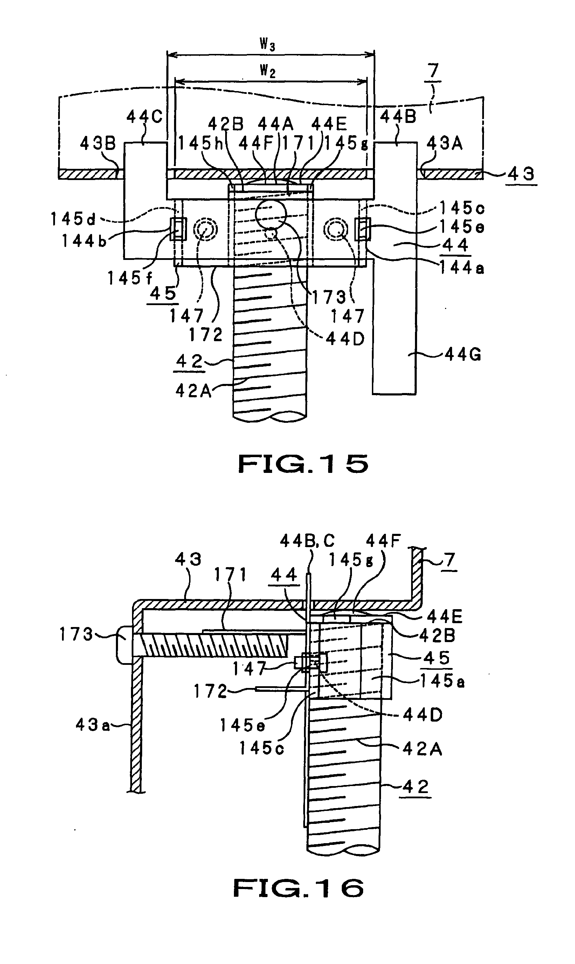

With the first holder member 44 being installed to the top cross-beam member 43 as above, a peripheral edge 44E of the domed holding portion 44F formed in the center of the support portion 44A is placed on the top end 42B of the lead screw 42 and the engagement projection 44D is engaged in the external thread 42A on the lead screw 42 as shown in FIGS. 15 and 16.

Note that the first holder member 44 is extended downward at a portion thereof opposite to the engagement portion 44B to form an extension portion 44G. The extension portion 44G is to be detected by each of the sensors 29 to 32 that control the operation of the aforementioned up/down drive mechanism 8.

The second holder member 45 is made by punching and bending a thin metal sheet, and has formed at the center thereof a lead screw fitting portion 145 to hold the outer surface of the lead screw 42 as shown in FIGS. 13 and 14. The lead screw fitting portion 145 is formed to have a pair of pressing support portions 145a and 145b that support the outer surface of the lead screw 42 from both side as shown in FIGS. 13 and 14. The pressing support portions 145a and 145b are formed wide and oblique at the sides thereof at which the lead screw fitting portion 145 is fitted onto the lead screw 42 as shown in FIGS. 13 and 14.

Also, the second holder member 45 includes fixing portions 45B and 45C on opposite sides of the lead screw fitting portion 145. The end portions of the fixing portions 45B and 45C are bent to form abutment support portions 145c and 145d which are supported in abutment by the first holder member 44. At the free ends of the abutment support portions 145c and 145d, there are formed engagement projections 145e and 145f which are to be engaged in engagement holes 144a and 144b, respectively, formed in the first holder member 44.

The first and second holder members 44 and 45 are placed on the top end of the lead screw 42 as will be described below.

First the first holder member 44 is disposed with the support portion 44A being placed on the top end 42B of the lead screw 42, and the second holder member 45 is put in abutment with the first holder member 44 with the lead screw 42 being laid between them. In this condition, the lead screw 42 is fitted in the lead screw fitting portion 145 of the second holder member 45.

When the first and second holder members 44 and 45 are thus put in abutment with each other, the engagement projections 145e and 145f are engaged into the respective engagement holes 144a and 144b.

Also, when the first and second holder members 44 and 45 are put in abutment with each other, the free ends of the abutment support portions 145c and 145d will abut one side of the first holder member 44 while the fixing portions 45B and 45C will be at a predetermined distance from the one side of the first holder member 44.

Note that fixing screws 147 are inserted in screw holes 146 formed in the fixing portions 45B and 45C, respectively. When the fixing screws 147 are driven into the screw holes 148, respectively, formed in the first holder member 44, the fixing portions 45B and 45C are fixed to the first holder member 44 while being elastically deformed and the pair of pressing support portions 145a and 145b are thus pressed to the outer surface of the lead screw 42, as shown in FIG. 14. Since the pair of pressing support portions 145a and 145b are pressed to the outer surface of the lead screw 42 under the effect of a resilience developed as the fixing portions 45B and 45C are elastically deformed, the first and second holder members 44 and 45 can hold the lead screw 42 with a large force. Namely, the first and second holder members 44 and 45 can positively be fitted on the lead screw 42.

As above, the first and second holder members 44 and 45 support the lead screw 42 at three points including the flat surface of the first holder member 44 and the pair of oblique pressing support portions 145a and 145b of the second holder member 45. Namely, the first and second holder members 44 and 45 can be installed in parallel with the axis of the lead screw 42.

As above, the lead screw 42 is held by the first and second holder members 44 and 45. When the first and second holder members 44 and 45 are combined together, the engagement projections 145e and 145f of the second holder member 45 are engaged in the engagement holes 144a and 144b, respectively, in the first holder member 44 and thus the pair of pressing support portions 145a and 145b are pressed to the outer surface of the lead screw 42. The precision of y-axial positioning of the lead screw 42 as in FIG. 14 is transmitted to the first holder member 44. As a result, the first holder member 44 is controlled in precision of y-axial positioning similarly to the second holder member 45 as shown in FIG.14.

Also, as shown in FIG. 14, when the first and second holder members 44 and 45 are combined in abutment with each other, the pair of support portions 145g and 145f projected from the upper end of the lead screw fitting portion 145 of the second holder member 45 project to both sides of the support portion 44A to limit the x-axial movement of the support portion 44A as shown in FIG. 14.

The pivot bearing mechanism 86 constructed as above holds the top end 42B of the lead screw 42 by the peripheral edge 44E of the domed holding portion 44F of the first holder member 44 and the outer surface of the lead screw 42 by the first holder member 44 and the lead screw fitting portion 145 of the second holder member 45.

The pivot bearing mechanism 86 placed on the top end 42B of the lead screw 42 supports the top cross-beam member 43 of the carrier 7 by the domed holding portion 44F formed in the center of the support portion 44A, and the peripheral edge 44E of the support portion 44A is supported on the top end 42B of the lead screw 42. Since the weight of the heavy carrier 7 is supported in point contact on the top end 42B of the lead screw 42, the pivot bearing mechanism 86 can hold the heavy carrier 7 positively and stably even if the latter is swaying during vertical movement.

Namely, in the pivot bearing mechanism 86, since the top cross-beam member 43 is supported in point contact on the generally domed holding portion 44F formed in the center of the support portion 44A, a certain degree of inclination, about the x- and y-axes in FIG. 16, of the top cross-beam member 43 or lead screw 42 in relation to each other is allowable.

Also, since the first and second holder members 44 and 45 supported on the lead screw 42 are prevented from being disengaged from the lead screw 42 and can be positively installed in position because the engagement projection 44D provided on the first holder member 44 is engaged on the external thread 42A of the lead screw 42.

In the pivot bearing mechanism 86 constructed as above, since the engagement projections 44B and 44C of the first holder member 44 are engaged in the engagement holes 43A and 43B formed in the top cross-beam member 43 as shown in FIGS. 15 and 16, the first holder member is prevented from being turned about the x-axis in FIG. 14. Further, since the lead screw 42 is held between the first and second holder members 44 and 45 and thus integral with the pivot bearing mechanism 86, the lead screw 42 is prevented from being rotated even if applied with a force for rotation about the z-axis. Therefore, the pivot bearing mechanism 86 limits the position of the lead screw 42 in the x-, y- and x-axial directions in relation to the carrier 7, and allows the lead screw 42 to rotate about the x- and y-axes to a certain degree while inhibiting the lead screw 42 to rotate about the z-axis.

As above, the carrier 7 supported by the pivot bearing mechanism 86 installed on the single lead screw 42 and vertically movable along the lead screw 42 is supported on the top end 42B of the lead screw 42. So, the carrier 7 is removable to above the lead screw 42. According to this embodiment, parts of the first holder member 44 included in the pivot bearing mechanism 86 are bent to form a pair of disengagement-preventive portions 171 and 172 as shown in FIG. 16. A shaft-shaped disengagement-preventive member 173 is inserted from a front side 43a of the top cross-beam member 43 of the carrier 7 and engaged in between the disengagement-preventive portions 171 and 172, whereby the carrier 7 can be inhibited from being disengaged from on the lead screw 42. It should be noted that the carrier 7 can be removed from on the lead screw 42 by removing the disengagement-preventing member 173.

Also, the drive mechanism 85 includes a pulse generator 46 that detects a rotation of the drive motor 34 and outputs a rotation pulse. The pulse generator mechanism 46 includes a disc 46A installed rotatably along with the drive pulley 38 installed to the output shaft 37, and a pulse generating unit 46B disposed on the periphery of the disc 46A as shown in FIG. 10. The disc 46A is formed from a light-shielding material and has a plurality of slits formed circumferentially at predetermined intervals.

The pulse generating unit 46B includes a light-emitting element and light-receiving element laid across the peripheral edge of the disc 46A. When the drive motor 34 is put into operation and the disk 46A is rotated, the light-receiving element of the pulse generator 46 intermittently detects light emitted from the light-emitting element and having passed through the slits to generate a pulse. The pulse signal is supplied to the microcomputer 26 for use to control the driving operation of the drive mechanism 85.

In the drive mechanism 85 constructed as above, when the drive motor 34 is put into operation, the drive pulley 38 installed to the output shaft 37 is rotated and the driven nut 40 is rotated by the driven belt 39 wound on the drive pulley 38. As the driven nut 40 is rotated, the lead screw 42 is rotated about its axis. When the lead screw 42 is rotated about its axis as the rotating driven nut 40 is rotated, the carrier 7 supported on the lead screw 42 is moved along the lead screw 42.

In the audio/display apparatus 1, as the drive mechanism 85 is driven, the audio unit 2 on the carrier 7 is moved vertically in relation to the display unit 3 supported on the support frame 6. That is, the audio unit 2 is moved by the drive mechanism 85 between the first position where it will uncover the display screen of the display unit 3 and the second position where it will be superposed on the display unit 3 and cover the display screen.

The audio/display apparatus 1 further includes a travel guide mechanism as shown in FIG. 8. The travel guide mechanism permits to move the audio unit 2 having a sufficient size to fully cover the display unit 3 up and down stably and smoothly in relation to the display unit 3. The travel guide mechanism includes first, second, third and fourth guide rails 47A, 47B, 47C and 47D provided in the direction of the height of the support frame 6 supporting the stationary display unit 3 and first, second, third and fourth guide roller mechanisms 48A, 48B, 48C and 48D installed to the vertically-movable carrier 7 supported on the carrier 7 to travel being guided by the guide rails 47A, 47B, 47C and 47D, respectively.

More specifically, the travel guide mechanism first and second upper travel guide mechanisms 101 and 102 provided at opposite lateral sides of the frame-shaped body 6A of the support frame 6, and first and second lower travel guide mechanisms 103 and 104 provided on the columnar support 6B inside the stand 5. These first and second upper travel guide mechanisms 101 and 102 and first and second lower travel guide mechanisms 103 and 104 are disposed in different front and read, and right and left positions in relation to the support frame 6, so that the carrier 7 can be moved up and down stably.

The first guide rail 47A included in the first lower travel guide mechanism 103 and second guide rail 47B included in the second lower travel guide mechanism 104 are disposed at opposite positions inside the stand 5 to extend in the direction of the height of the support frame 6 as shown in FIGS. 7 and 8. The third guide rail 47C included in the first upper travel guide mechanism 101 and fourth guide rail 47D included in the second upper travel guide mechanism 102 are disposed at opposite sides of the frame-shaped body 6A of the support frame 6 as shown in FIGS. 7 and 8.

Note that the frame-shaped body 6A of the support frame 6 includes a pair of reinforcing support members 6E provided nearly in the center thereof to assure the strength of the frame-shaped body 6A.

The first and second guide rails 47A and 47B are disposed across the drive mechanism 85 as shown in FIGS. 4 and 8, On the other hand, the third and fourth guide rails 47C and 47D are disposed outside and behind the first and second guide rails 47A and 47B.

Each of the guide rails 47A to 47D is formed to have a C-shaped section open along the entire length at the side thereof opposite to the carrier 7, and has disposed therein a corresponding one of the rollers of the guide roller mechanisms 48A to 48D, as shown in FIG. 8.

The first to fourth guide roller mechanisms 48A to 48D used in this embodiment are constructed to guide the carrier 7, which is moved up and down in relation to the support frame 6, by limiting the x- and y-axial positions of the carrier 7 and the angular positions about the x-, y- and z-axes as shown in FIG. 8.

As having previously been described, the position sensors 29, 30, 31 and 32 to detecting the position of the carrier 7 are provided inside the columnar support 6B of the support frame 6 as shown in FIG. 7. Each of these position sensors 29, 30, 31 and 32 is formed from a mechanical switch, contactless optical switch or the like.

The first, second, third and fourth guide roller mechanisms 48A, 48B, 48C and 48D included in the travel guide mechanisms 101 to 104 supporting the carrier 7 to be movable vertically in relation to the support frame 6 are generally equal in basic construction to each other. As shown in FIGS. 8 and 15, the first, second, third and fourth guide roller mechanisms 48A, 48B, 48C and 48D include first, rollers 50A, 50B, 50C and 50D which are guided by first walls 141a, 141b, 141c and 141d, respectively, of the first to fourth guide rails 47A, 47B, 47C and 47D each having C-shaped section, second rollers 51A, 51B, 51C and 51D which are guided by second walls 142a, 142b, 142c and 142d, respectively, formed in parallel oppositely to the first walls 141a, 141b, 141c and 141d, respectively, and third rollers 52A, 52B, 52C and 52D which are guided by third walls 143a, 143b, 143c and 143d, respectively, perpendicular to the first walls 141a, 141b, 141c and 141d and second walls 142a, 142b, 142c and 142d, respectively.

As shown in FIG. 8, the first rollers 50A, 50B, 50C and 50D and second rollers 51A, 51B, 51C and 51D are installed for their rotating shafts to be parallel to each other, and the third rollers 52A, 52B, 52C and 52D are installed for their rotating shafts to be perpendicular to the rotating shafts of the first rollers 50A, 50B, 50C and 50D and second rollers 51A, 51B, 51C and 51D.

Note that the first to fourth guide roller mechanisms 48A, 48B, 48C and 48D are installed via the support brackets 49, respectively, fixed to the carrier 7 oppositely to the first to fourth guide rails 47A, 47B, 47C and 47D.

Here will be described in detail the first guide roller mechanism 48A included in the first lower travel guide mechanism 103, second guide roller mechanism 48B in the second lower travel guide mechanism 104, third guide roller mechanism 48C in the first upper travel guide mechanism 101 and fourth guide roller mechanism 48D in the second upper travel guide mechanism 102.

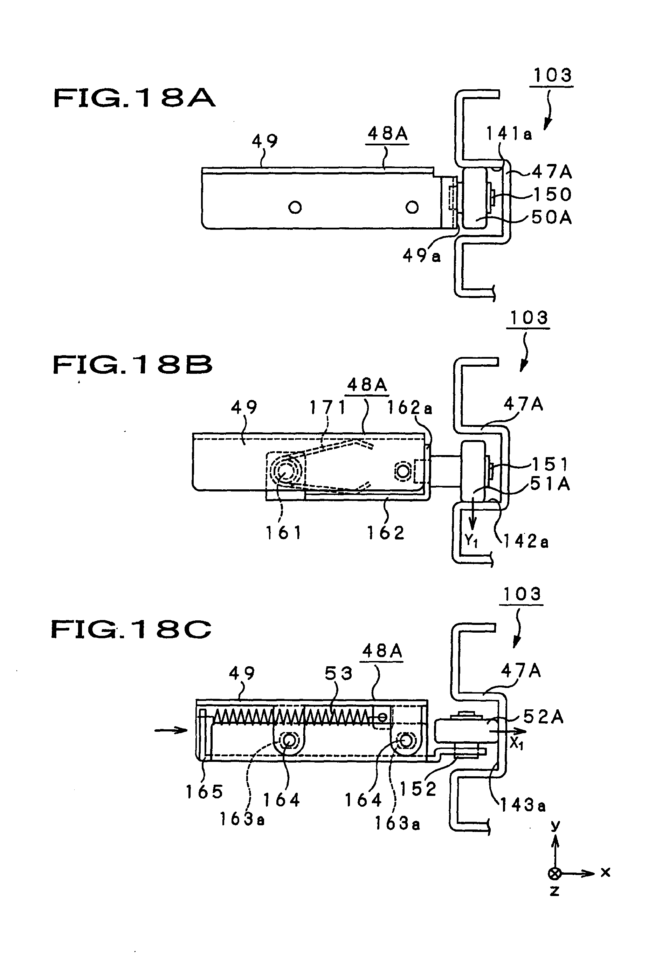

As shown in FIGS. 18A, 18B and 18C, the first guide roller mechanism 48A included in the first lower travel guide mechanism 103 includes first to third rollers 50A, 51A and 52A each installed to the support bracket 49. More specifically, the first roller 50A is installed on a spindle 150 implanted in a support portion 49a formed by bending the free end portion of the support bracket 49, and thus it will roll on a first wall 141 a of the first guide rail 47A.

Also, the second roller 51A is installed to the support bracket 49 via a pivoting support plate 162 supported pivotably on a fixing shaft 161 provided on the support bracket 49. More specifically, the second roller 51A is installed on a spindle 151 implanted to a support portion 162a formed by bending the free end portion of the pivoting support plate 162. The pivoting support plate 162 is forced to pivot in the direction of arrow Y1 in FIG. 18B by a helical torsion spring 171 supported on the fixing shaft 161 and between the support bracket 49 and pivoting support plate 162, so that the second roller 51A will be forced to roll on a second wall 142a of the first guide rail 47A.

Further, the third roller 52A is installed on a spindle 153 implanted to the free end portion of a sliding support plate 165 installed to the support bracket 49 movably toward and away from the latter. Note that the sliding support plate 165 has elongated holes 163a formed therein and fixing shafts 164 implanted on the support bracket 49 are inserted in the elongated holes 163, respectively. Namely, the sliding support plate 165 is supported movably toward and away from the support bracket 49. Also, the sliding support plate 165 is forced by a helical tension spring 53 provided between the pivoting support plate 165 and support bracket 49 to move in the direction of arrow X1 in FIG. 18C in which the third roller 52A is projected from the support bracket 49. When the sliding support plate 165 is forced in the direction of arrow X1, the third roller 52A will be forced to roll on a third wall 143a of the first guide rail 47A.

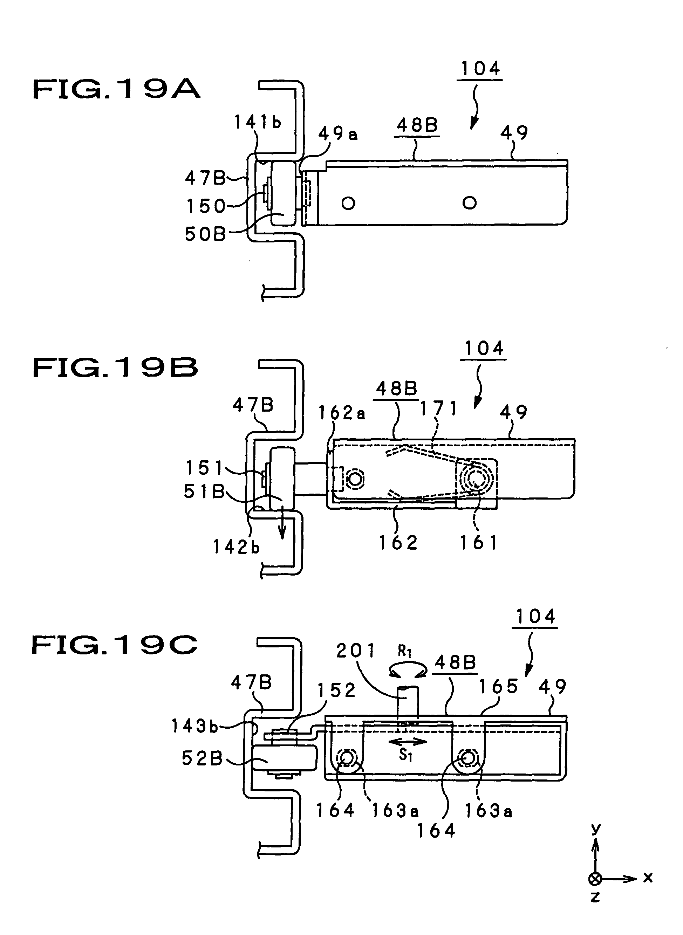

As shown in FIGS. 19A, 19B and 19C, the second guide roller mechanism 48B included in the second lower travel guide mechanism 104 includes first to third rollers 50B, 51B and 52B each installed to the support bracket 49. More specifically, the first roller 50B is installed on a spindle 150 implanted in a support portion 49a formed by bending the free end portion of the support bracket 49, and thus it will roll on a first wall 141b of the second guide rail 47B.

Also, the second roller 51B is installed to the support bracket 49 via a pivoting support plate 162 supported pivotably on a fixing shaft 161 provided on the support bracket 49. More specifically, the second roller 51B is installed on a spindle 151 implanted to a support portion 162a formed by bending the free end portion of the support plate 162. The pivoting support plate 162 is forced to pivot in the direction of arrow Y 1 in FIG. 19B by a helical torsion spring 163 provided on the fixing shaft 161 and between the support bracket 49 and pivoting support plate 162, so that the second roller 51B will be forced to roll on a second wall 142b of the second guide rail 47B.

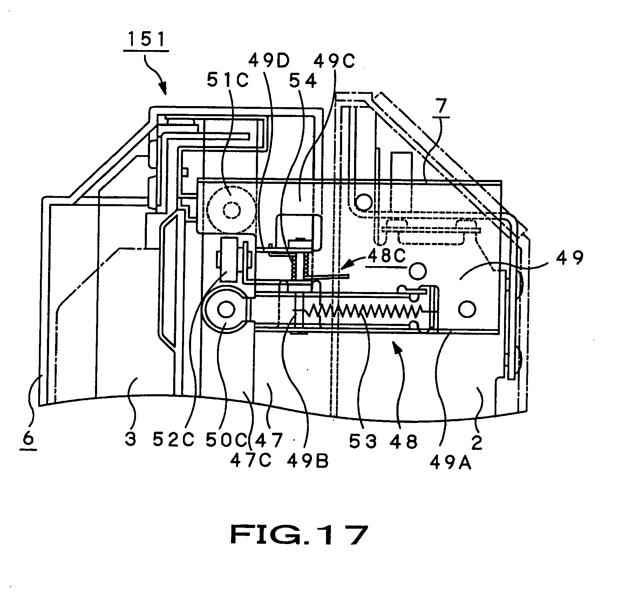

Further, the third roller 52B is installed on a spindle 152 implanted to the free end portion of a sliding support plate 165 installed to the support bracket 49 movably toward and away from the latter, and is in contact with a third wall 143b of the second guide rail 47B. Note that the sliding support plate 165 has elongated holes 163a formed therein and fixing shafts 164 implanted on the support bracket 49 are inserted in the elongated holes 163a, respectively. Namely, the sliding support plate 165 is supported movably toward and away from the support bracket 49 to adjust the contact of the third roller 52B with the third wall 143b. By turning an eccentric driver 201 inserted through a through-hole formed in the support bracket 49 in the direction of arrow R1 in FIG. 17B, the sliding support plate 165 is moved in the direction of arrow S 1 in FIG. 19B, thereby permitting to adjust the x-axial projection of the third roller 52B in relation to the support bracket 49.

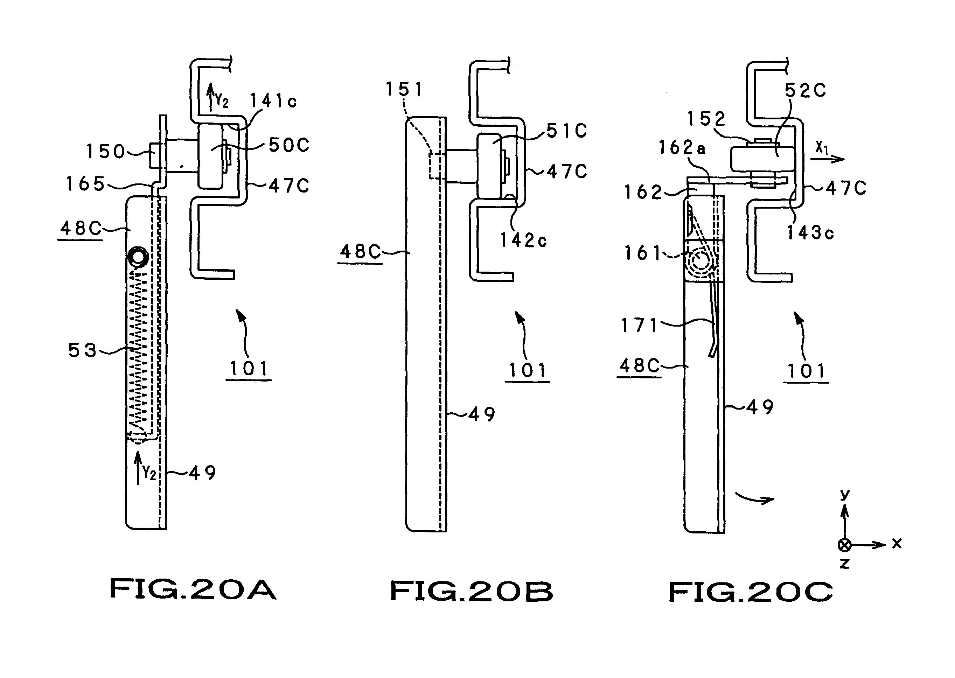

Next, the third guide roller mechanism 48C included in the first upper travel guide mechanism 101 will be explained. As shown in FIGS. 20A, 20B and 20C, the third guide roller mechanism 48C includes first to third rollers 50C, 51C and 52C each installed to the support bracket 49. More specifically, the first roller 50C is installed on a spindle 150 implanted in the free end portion of a sliding support plate 165 installed movably toward and away from the support bracket 49. It should be noted that the sliding support plate 165 is forced by a helical tension spring 53 provided between the sliding support plate 165 and support bracket 49 to move in the direction of arrow Y2 in FIG. 20A in which the first roller 50C is projected from the support bracket 49. Thus, the first roller 50C will be forced to roll on a first wall 141 c of the third guide rail 47C.

As shown in FIG. 20B, the second roller 51C is installed on a spindle 151 implanted in the free end portion of the support bracket 49 to roll on a second wall 142c of the third guide rail 47C.

Further, the third roller 52C is installed to the support bracket 49 via a pivoting support plate 162 supported movably on a fixing shaft 161 provided on the support bracket 49. That is, the third roller 52C is installed on a spindle 152 implanted in a support portion 162a formed by bending the free end portion of the pivoting support plate 162. The pivoting support plate 162 is forced to pivot in the direction of arrow X 1 in FIG. 20C by a helical torsion spring 163 supported on the fixing shaft 161 and between the support bracket 49 and pivoting support plate 162, so that the third roller 52C will be forced to roll on a third wall 143c of the third guide rail 47C.

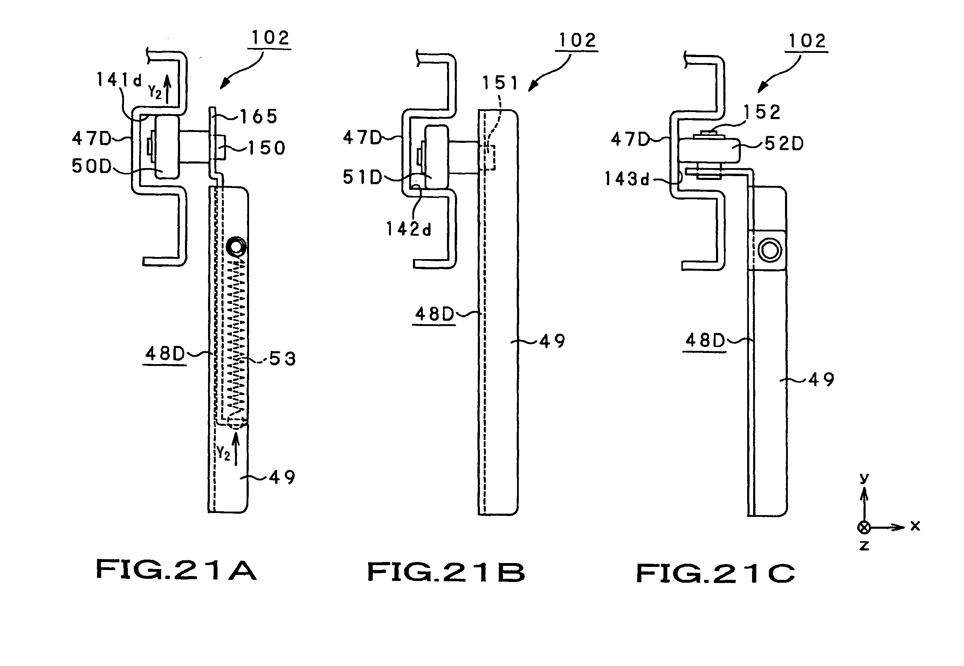

Further, the fourth guide roller mechanism 48D included in the second upper travel guide mechanism 102 will be explained herebelow. The fourth guide roller mechanism 48D includes first to third rollers 50D, 51D and 52D installed to the support bracket 49 as shown in FIGS. 21A, 21B and 21C.

In the fourth guide roller mechanism 48D, the first roller 50D is installed on a spindle 150 implanted in the free end portion of a sliding support plate 165 installed to the support bracket 49 movably toward and away from the latter. The sliding support plate 165 is forced by a helical tension spring 53 provided between the sliding support plate 165 and support bracket 49 to move in the direction of arrow Y2 in FIG. 21A in which the first roller 50C is projected from the support bracket 49. When the sliding support plate 165 is forced in the direction of arrow Y2, the first roller 50D is forced to roll on a first wall 141d of the fourth guide rail 47D.

The second roller 51D is installed on a spindle 151 implanted in the free end portion of the support bracket 49 to roll on a second wall 142d of the fourth guide rail 47D as shown in FIG. 21B.

Further, the third roller 52D is installed on a spindle 152 implanted in a support portion 49a formed by bending the free end portion of the support bracket 49 to roll on a third wall 143d of the fourth guide rail 47D as shown in FIG. 21C.

As above, in the up/down drive mechanism 8 in which the carrier 7 is supported on the support frame 6, the first and second guide roller mechanisms 48A and 48B are laid in contact with the first walls 141a and 141b of the first and second guide rails 47A and 47B and the second rollers 51 A and 51B are forced by the helical torsion springs 163 to be in contact with the second walls 142a and 142b opposite to the first walls 141a and 141b, as shown in FIGS. 8, 18 and 19. Further, the first rollers 50C and 50D of the third and fourth guide roller mechanisms 48C and 48D are forced by the helical torsion springs 163 to be in contact with the first walls 141c and 141d of the third and fourth guide rails 47C and 47D and the second rollers 51C and 51D are laid in contact with the second walls 142c and 142d opposite to the first walls 141c and 141d as shown in FIGS. 8, 20 and 21. Thus, the carrier 7 is limited in y-axial position, in angular position about the x-axis and in angular position about the z-axis which is also the axis of the lead screw 42, as shown in FIG. 8, in relation to the support frame 6.

Further, in the up/down drive mechanism 8, the third roller 52A of the first guide roller mechanism 48A is formed by the helical tension spring 53 in the direction of arrow X1 to be in contact with the third wall 143a of the first guide rail 47A as shown in FIGS. 8 and 18C, and the third roller 52C of the third guide roller mechanism 48C is forced by the helical torsion spring 163 in the direction of arrow X1, as in case the third roller 52A is forced, to be in contact with the third wall 143c of the third guide rail 47C as shown in FIG. 20C. The third roller 52B of the second guide roller mechanism 48B is laid in contact with the third wall 143b of the second guide rail 47B as shown in FIG. 19C, and the third roller 52D of the fourth guide roller mechanism 48D is laid in contact with the third wall 143d of the fourth guide rail 47D as shown in FIG. 21C. Because of the above supporting structure for the third rollers 52A, 52B, 52C and 52D of the first to fourth guide roller mechanisms 48A, 48B, 48C and 48D, the up/down drive mechanism 8 permits to limit the x-axial position of the carrier 7 in relation to the support frame 6 and also the y-axial position of the carrier 7 in relation to the support frame 6, as shown in FIG. 8.

In addition to the above limitation of the x- and y-axial positions of the carrier 7, the up/down drive mechanism 8 in the embodiment of the present invention permits to limit the rotation of the carrier 7 about the x-, y- and z-axes in relation to the support frame 6, as will be seen from FIG. 8.

The up/down drive mechanism 8 constructed as above can move the carrier 7 up and down stably in relation to the stationary support frame 6 because the first to fourth guide rails 47A to 47D and first to fourth guide roller mechanisms 48A to 48D permit to limit the x- and y-axial positions of the carrier 7 and rotation of the carrier 7 about the x-, y- and x-axes in relation to the support frame 6.

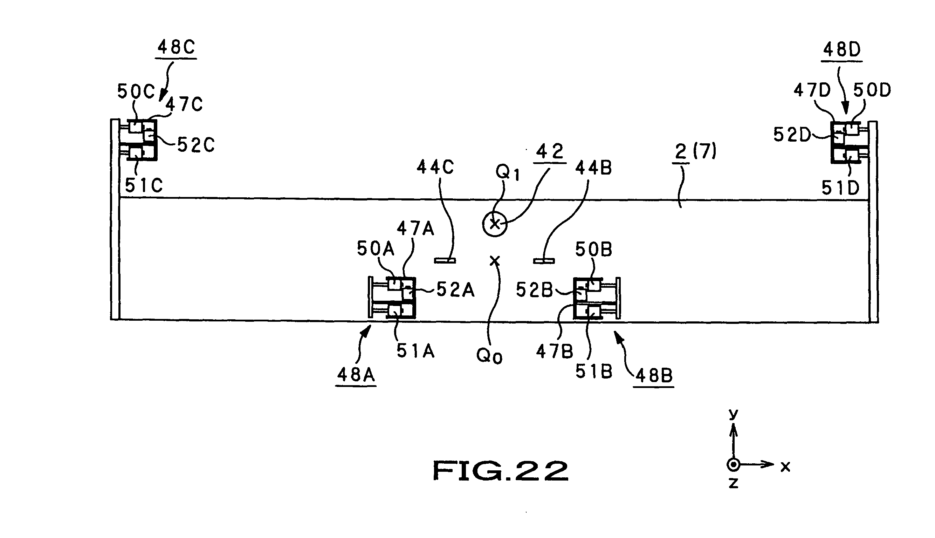

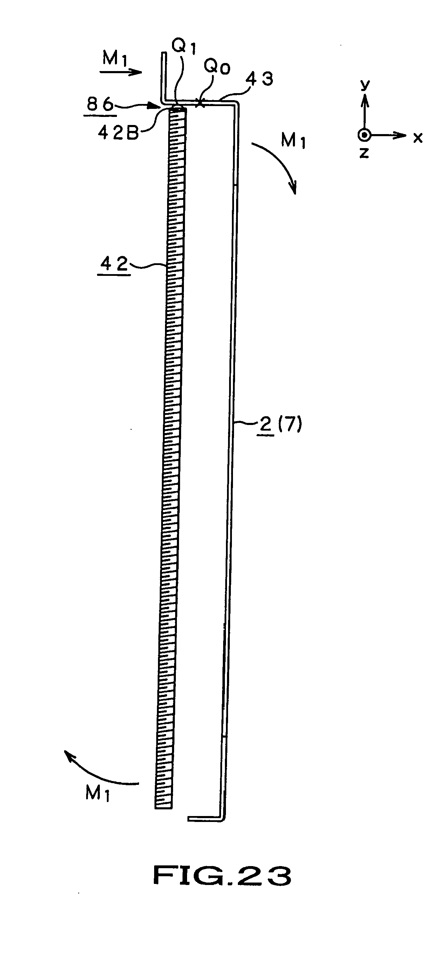

In the audio/display apparatus 1 according to the embodiment of the present invention, the carrier 7 is supported on the pivot bearing mechanism 86 so that a support point Q 1 thereof is positioned at the side of the first rollers 50C and 50D included in the third and fourth guide roller mechanisms 48C and 48D, respectively, located behind the center of gravity Q0 of the carrier 7 supported on the pivot bearing mechanism 86 as shown in FIG. 22. Thus, in the audio unit 2 supported on the carrier 7, a torque in the direction of arrow M 1 in FIG. 23 about the support point Q1 will be given to the pivot bearing mechanism 86 as shown in FIG. 23. As a result, a load will be applied to each of the first rollers 50A and 50B installed rotatably on the stationary spindles 150, respectively, located behind the first and second guide roller mechanisms 48A and 48B, respectively, and to each of the second rollers 51C and 51D installed rotatably on the spindles 151, respectively, located before the third and fourth guide roller mechanisms 48C and 48D, respectively. It is possible to control the loads applied to these second rollers 51A and 51B located before the first and second guide roller mechanisms 48A and 48B and forced by the forcing members and to the first rollers 50C and 50D located behind of the third and fourth guide roller mechanisms 48C and 48D.

Thus, it is possible to prevent the carrier 7 from being applied with any larger force than the force of the forcing section provided to force the second rollers 51A and 51B of the first and second guide roller mechanisms 48A and 48B and first rollers 50C and 50D of the third and fourth guide roller mechanisms 48C and 48D.

According to the embodiment of the present invention, the carrier 7 is supported at a total of four points at opposite sides thereof on the support frame 6 via the first to fourth guide roller mechanisms 48A to 48D to be movable vertically, and the single lead screw 42 included in the carrier 7 is rotated about its own axis, to thereby move the carrier 7 vertically, as having been described above. Thus, the carrier 7 is limited in x- and y-axial positions and in rotation about the x-, y- and z-axes. So, the lead screw 42 to move the carrier 7 vertically may not be provided in the center of the carrier 7 but may be provided in any position where the driving force can be transmitted from the drive mechanism 85 to the lead screw 42.

Note that the up/down drive mechanism 8 according to this embodiment is not limited to the aforementioned construction but may appropriately be modified without departing from the scope defined herein. That is, in case the audio unit 2 and display unit 3 are larger and heavier, the up/down drive mechanism 8 may include additional guide rails and guide roller mechanisms which are not necessarily required. Also, in case the drive motor 34 is laid horizontally or in case the drive motor 34 and driven nut 40 are disposed near to each other, the rotation of the drive motor 34 may be transmitted to the driven nut 40 via gears, for example.

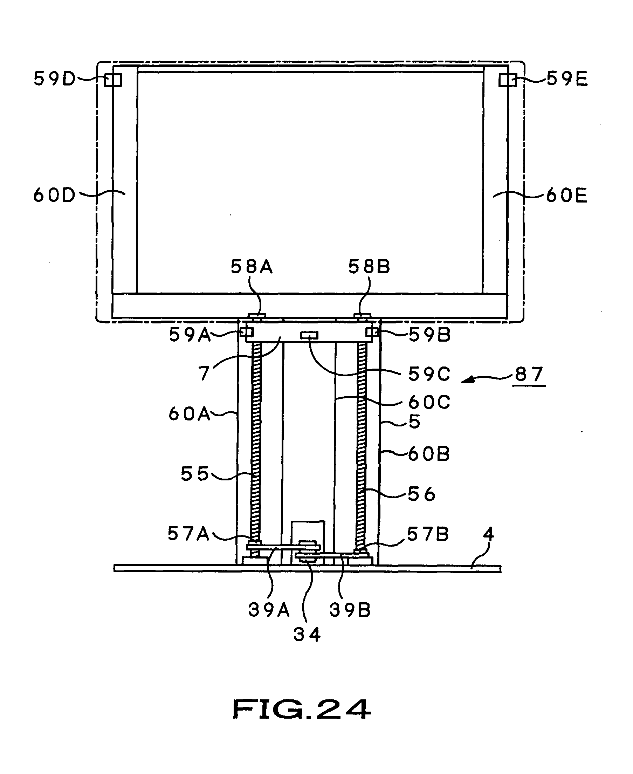

Next, the present invention will be illustrated and explained concerning the second embodiment thereof. As shown in FIGS. 24 to 27, an audio/display apparatus 1 as the second embodiment uses an up/down drive mechanism 87 to move a carrier 7 vertically by first and second driven screws 55 and 56 rotated by a drive motor 34. The up/down drive mechanism 87 includes the first and second driven screws 55 and 56, driven pulleys 57A and 57B fixed to the drive screws 55 and 56, respectively, driven nuts 58A and 58B fixed to the carrier 7 and through which the first and second driven screws 55 and 56 are penetrated, respectively, etc.

The above first and second driven screws 55 and 56 are elongated shafts having a length corresponding to the moving distance of the carrier 7 and externally threaded over the length thereof. As shown in FIG. 24, the first driven screw 55 is supported upright at either end thereof in a pair of bearings installed inside a stand 5. The bearings are axially aligned with top and bottom cross-beam members (not shown) of a support frame 6. Also, inside the stand 5, the second driven screw 56 is supported upright in a similar supporting mechanism to that for the first driven screw 55 to extend in parallel to the latter.

The first and second driven screws 55 and 56 have driven pulleys 57A and 57B fixed at portions, respectively, near the bottom ends thereof. The rotation of the drive motor 34 is transmitted to the first and second driven screws 55 and 56 via transmission belts 39A and 39B wound on the driven pulleys 57A and 57B and a drive pulley 38 of the drive motor 34, so that the driven screws 55 and 56 are rotated at the same speed.

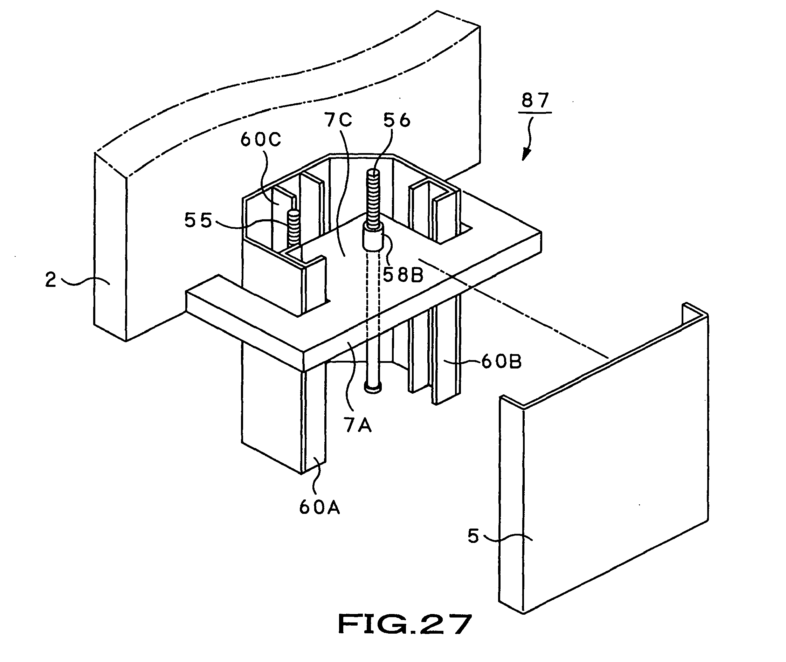

As shown in FIG. 27, the first and second driven screws 55 and 56 are penetrated through a top cross-beam member 7C of the carrier 7 and driven nuts 58A and 58B are screwed on the first and second driven screws 55 and 56, respectively, at the top of the top cross-beam member 7C. The driven nuts 58A and 58B are cylindrical members, and fitted in through-holes, respectively, formed in a top cross-beam member 7A. The driven nuts 58A and 58B have flange portions formed at the lower-end portions thereof and which are to be fixed to the top cross-beam member 7C. The through-holes in the driven nuts 58A and 58B are nearly equal in diameter to the outside diameter of the first and second drive screws 55 and 56, and have inner walls threaded over the length thereof (not shown).

The driven nuts 58A and 58B are fixed to the top cross-beam member 7C against rotation relative to the latter and for disengagement from the latter. The first and second drive screws 55 and 56 are penetrated through the driven nuts 58A and 58B, respectively, with the external threads thereof being engaged in the internal threads of the driven nuts 58A and 58B, respectively. As the first and second drive screws 55 and 56 are rotated about their axes, the driven nuts 58A and 58B are moved axially thereof owing to the engagement between the internal threads thereof and external threads of the drive screws 55 and 56 to move the carrier 7 vertically by means of the top cross-beam member 7C.

Note that the audio unit 2 having been moved from the first position to the second position is inclined in relation to the display unit 3 as the case may be if the precision of assembling the carrier 7 to the support frame 6 or precision of installing the audio unit 2 or display unit 3 is not satisfactory. Even if the audio unit 2 or display unit 3 is found so improperly positioned, it is possible to adjust the engagement of the driven nuts 58A and 58B with the first and second drive screws 55 and 56, respectively. Namely, the horizontal position of the driven nuts 58A and 58B in relation to the first and second drive screws 55 and 56, respectively, is adjustable to correct such an inclination of the audio unit 2.

The up/down drive mechanism 87 in the second embodiment also includes a travel guide mechanism composed of a plurality of guide roller mechanisms and a plurality of guide rails to assure a stable up/down movement of the carrier 7 in relation to the support frame 6. More specifically, the travel guide mechanism includes first to fifth guide roller mechanisms 59A to 59E and first to fifth guide rails 60A to 60E.

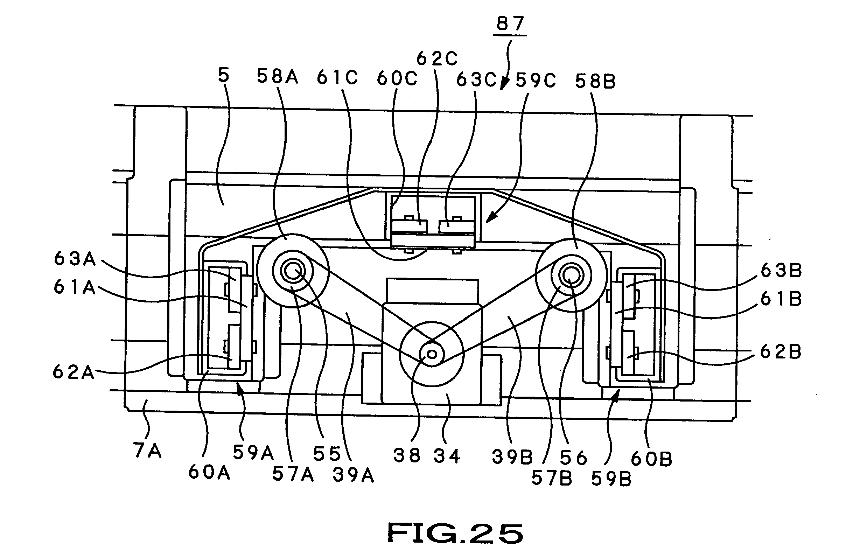

Each of the guide rails 60 is formed from a channel-shaped elongated material, and installed in place upright to the support frame 6. As shown in FIGS. 25 to 27, the first to third guide rails 60A to 60C are installed upright on the support frame 6 to surround the top cross-beam member 7C of the carrier 7. The fourth and fifth guide rails 60D and 60E are installed upright on the support frame 6 oppositely to the opposite lateral sides, respectively, of the display unit 3.

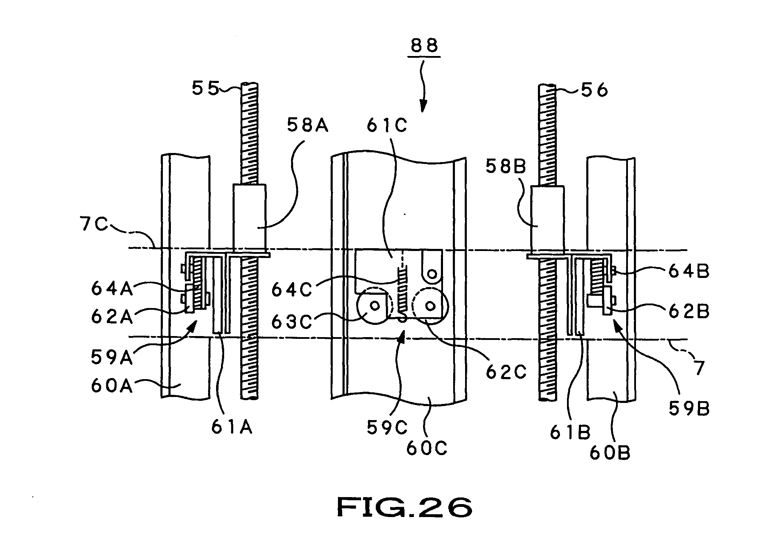

The guide roller mechanisms 59A to 59E are equal in structure to each other, and include first to fifth brackets 61 A to 61E, first guide rollers 62A to 62E, second guide rollers 63A to 63E and helical springs 64A to 64E, respectively, as shown in FIG. 26. The guide roller mechanisms 59 have the brackets 61 thereof fixed to the carrier 7, and the first and second guide rollers 62 and 63 are installed to the brackets 61 to rotate under the resilience of the helical springs 64 in a direction away from each other. The guide roller mechanisms 59 are installed to the guide rails 60 with the first and second guide rollers 62 and 63 being positioned in the inner space.

In the drive mechanism 87, the rotation of the drive motor 34, put in operation, is transmitted from an output shaft 37 of the drive motor 34 to the drive pulley 38, transmission belts 39A and 39B, driven pulleys 57A and 57B, and then to the first and second drive screws 55 and 56 which will thus be rotated. In the drive mechanism 87, the rotation of the first and second drive screws 55 and 56 is transmitted, via the internal and external threads engaged with each other, to the driven nuts 58A and 58B which will thus be moved axially along the drive screws 55 and 56. Therefore, the drive mechanism 87 moves the carrier 7, to which the driven nuts 58A and 58B are fixed as driving sources, vertically along the support frame 6.

Also in the up/down drive mechanism 87 according this embodiment, the combination of the guide roller mechanisms 59 and guide rails 60 limits the x- and y-axial position of the carrier 7 in relation to the support frame 6 and also the rotation of the carrier 7 about the x- and z-axes in relation to the support frame 6. Such a limiting mechanism makes it possible to move the carrier 7 up and down stably in relation to the support frame 6 and makes it unnecessary to adjust each of the guide roller mechanisms 59. Use of the same parts in all the mechanisms will lead to streamlining of the assembling and adjusting steps and reduction of the manufacturing costs.

In the audio/display apparatus 1 according the embodiments of the present invention, the aforementioned up/down drive mechanism 8 (87) and travel guide mechanisms permit to move the carrier 7 supporting the audio unit 2 thereon vertically in relation to the support frame 6 having the display unit 3 mounted thereon. The carrier 7 having the large, heavy audio unit 2 mounted thereon can be moved up and down relative to the support frame 6 by the drive motor 34 whose output torque is large.

In this audio/display apparatus 1, since the audio unit 2 is moved vertically along the front side of the display unit 3, there will be defined a clearance between the audio and display units 2 and 3 along the entire length of the latter. Magazines, recording medium casings or other things will be placed near the stand 5 of the audio/display apparatus 1 as in the case of the ordinary television receiver.

In the audio/display apparatus 1, a foreign body 71 such as a thing fallen from on the audio unit 2 or display unit 3 may possibly fall into a clearance defined between the audio and display units 3 when the audio unit 2 is moved up or down. In the audio/display apparatus 1, if the audio unit 2 is moved up or down while a foreign body 71 somewhat larger than the clearance is staying between the audio and display units 2 and 3, the foreign body 71 will be caught between the audio and display units 2 and 3 and possibly scratch or damage the display screen surface of a liquid crystal display 22 used in the display unit 3.

Also in the audio/display apparatus 1, if there is placed in a projected area of the audio unit 2 (area opposite to the bottom surface of the audio unit 2) a foreign body 71 larger than the bottom surface of the audio unit 2 having moved to the first position and height of the base 4, the foreign body 71 will be lodged between the audio unit 2 and base 4. In this condition, a large load will be applied to the drive motor 34 and the lead screw 42, bearing 41 and the like will possibly be broken and displaced.

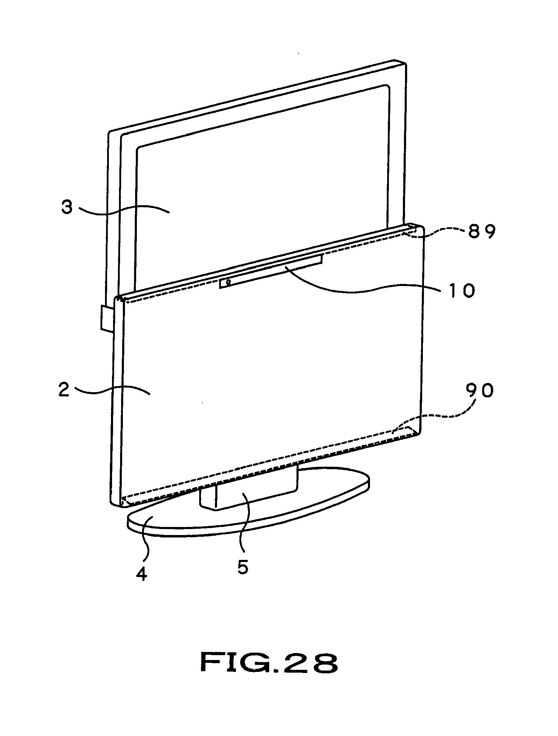

To detect such a foreign body 71 and stop the carrier 7 from moving up or down, the audio/display apparatus 1 is provided at the top of the audio unit 2 with an upper foreign body detecting mechanism 89 included in the upper stop sensor 29 as shown in FIG. 28. Also, in the audio/display apparatus 1, there is provided a lower foreign body detecting mechanism 90 included in the lower stop sensor 30 on the bottom of the audio unit 2. In the audio/display apparatus 1, the upper and lower foreign body detecting mechanisms 89 and 90 can detect a foreign body 71 everywhere on the large audio unit 2 as will be described in detail later. Thus, the audio/display apparatus 1 is highly safe and reliable.

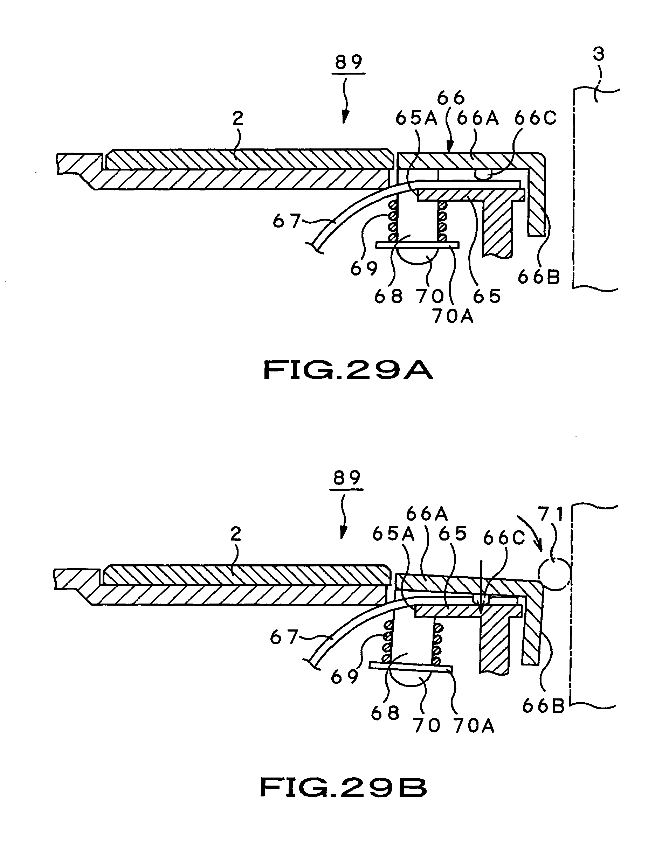

The upper foreign body detecting mechanism 89 is a combination of a concave fixing member 65 provided on a top rear portion of the audio unit 2, opposite to the display unit 3, and concaved over the length thereof (the fixing member 65 being one step lower than the top surface of the audio unit 2), and upper ornamental/structural components assembled to the fixing member 65, as shown in FIG. 29. The upper foreign body detecting mechanism 89 further includes an actuating plate 66, pressure-sensitive sheet 67, helical spring 69, etc. In the concave fixing member 65, there is formed a slit 65A extending along the plane one step lower than the audio-unit top surface and in parallel to the edge line of the audio-unit top surface and over the entire length of the fixing member 65. In the concave fixing member 65, a plurality of guide holes (not shown) is formed in line at predetermined intervals.

The actuating plate 66 includes a main surface portion 66A and detection wall portion 66B formed integrally with each other and from a synthetic resin in the same color as that of the housing of the audio unit 2, for example. Of the actuating plate 66, the main surface portion 66A is formed similar in shape to, and a little thinner than, the concave fixing member 65, and the detection wall portion 66B is formed by bending an end portion of the main surface portion 66A at right angles. The detection wall portion 66B is opposite to the front side of the display unit 3. The actuating plate 66 is an elongated member having a generally L-shaped section defined by the sections of the horizontal main surface portion 66A and detection wall portion 66B perpendicular to the former. Of the actuating plate 66, the main surface portion 66A and detection wall portion 66B are formed a little thin and elongated to be partially deformable elastically.

The actuating plate 66 has formed integrally on the inner surface of the main surface portion 66A a switch actuator 66C formed from a plurality of convexities disposed in line oppositely to the detection wall portion 66B. The actuating plate 66 also has formed integrally on the inner surface of the main surface portion 66A a plurality of fulcrum studs 68 disposed in line. The fulcrum studs 68 are formed correspondingly to guide holes formed in the aforementioned concave fixing member 65 and have formed therein bottomed holes (not shown) open to the free end. When the actuating plate 66 is combined with the concave fixing member 65, the fulcrum studs 68 are penetrated through the corresponding guide holes.

As well known, the pressure-sensitive sheet 67 is formed from a pair of electrodes covered with an elastic sheet with the insulation of the electrodes being maintained. When the elastic sheet is pressed, the electrodes are short-circuited between them to provide switching. The pressure-sensitive sheet 67 can detect a state change in a wide range and can be freely deformed for use. As shown in FIG. 29, the pressure-sensitive sheet 67 is led from inside the audio unit 2 to the concave fixing member 65 through the slit 65A, and joined to the entire area of the fixing member 65.

Of the upper foreign body detection mechanism 89, the actuating plate 66 is combined with the concave fixing member 65 to hold the pressure-sensitive sheet 67 between them. A helical spring 69 is fitted on each of the fulcrum studs 68 inserted in the guide holes in the actuating plate 66, and a set screw 70 is screwed in the bottomed hole to compress the helical spring 69 by a flange portion 70A thereof. The helical spring 69 is compressed between the flange portion 70A of the set screw 70 and the inner surface of the fixing member 65 to accumulate the resilience which will be used to elevate the actuating plate 66 to above the fixing member 65 and hold it there. The actuating plate 66 will not emit any sound of vibration and held stably along its entirety when the audio unit 2 is moved vertically because the resilience of the helical spring 69 acts on the actuating plate 66.

Of the upper foreign body detecting mechanism 89, the main surface portion 66A of the actuating plate 66 is nearly flush with the top surface of the audio unit 2 and the detection wall portion 66B is opposite to the front side of the display unit 3, as shown in FIG. 29A. In this condition, the switch actuator 66C of the actuating plate 66 of the upper foreign body detecting mechanism 89 is in loose contact with the pressure-sensitive sheet 67 and holds the latter in the off state.

In case a foreign body 71 dropped on the top surface of the audio unit 2 is lodged in a clearance defined between the detecting wall portion 66B of the actuating plate 66 and the display unit 3, the upper foreign body detecting mechanism 89 quickly detects the foreign body 71 thus lodged and outputs a detection signal to the microcomputer 26. When the audio unit 2 is moved up or down with the foreign body 71 being caught between the actuating plate 66 and display unit 3, the detection wall portion 66B of the upper foreign body detecting mechanism 89 is applied, via the foreign body 71, with a force that takes the detection wall portion 66B into the clearance.

In the upper foreign body detecting mechanism 89, the force applied to the detection wall portion 66B acts as a force to pivot the actuating plate 66 about the switch actuator 66C in the clockwise direction as shown in FIG. 29B. In the upper foreign body detecting mechanism 89, the actuating plate 66 is moved against the resilience of the helical spring 69 in a direction in which the fulcrum studs 68 opposite to the detection wall portion 66B will come out of the guide holes. Thus, the switch actuator 66C as a pivoting fulcrum for the actuating plate 66 will be applied with a downward force to press the pressure-sensitive sheet 67 in the direction of arrow in FIG. 29B. The pressure-sensitive sheet 67 is thus turned on to output a detection signal.

In the upper foreign body detecting mechanism 89, when the foreign body 71 is removed out of the clearance, the actuating plate 66 is returned to the initial position under the action of the helical spring 69. Note that since in the upper foreign body detecting mechanism 89, the actuating plate 66 is partially defined elastically as above, it pivots at a place where the foreign body 71 is lodged as above and thus the foreign body 71 can be detected with a high sensitivity everywhere along the whole length of the actuating plate 66. The upper foreign body detecting mechanism 89 can detect a foreign body 71 everywhere along the entire top surface of the audio unit 2, but the actuating plate 66 will not give any feeling of strangeness because its support structure is provided not to be visible from outside.

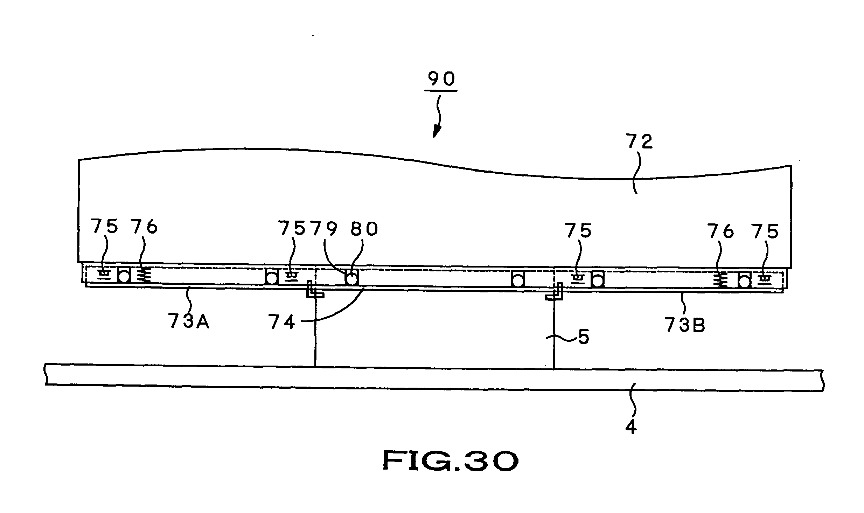

The lower foreign body detecting mechanism 90 is deigned to positively detect a foreign body 71 everywhere on the entire bottom surface of the audio unit 2. The lower foreign body detecting mechanism 90 is constructed to make detection of a foreign body 71 so that a portion of the bottom surface, corresponding to the stand 5 at the center as shown in FIG. 30, will not be any dead space. The lower foreign body detecting mechanism 90 includes three blocks, namely, a central block corresponding to the stand 5, and lateral side blocks across the central block. The lower foreign body detecting mechanism 90 is constructed for the central and lateral side blocks to interlock with each other, whereby the structure and adjustment of the mechanism 90 can be simplified and detection can be made without any dead space over the entire area of the mechanism 90.

As shown, the lower foreign body detecting mechanism 90 includes a bracket member 72 fixed to the bottom surface of the housing of the audio unit 2, a pair of right and left actuating members 73A and 73B combined with the bracket member 72 and a coupling actuating plate 74 provided at the center to couple the actuating members 73A and 73B with each other. The lower foreign body detecting mechanism 90 further includes a pair of detection switches 75A and 75B provided for each actuating member 73 and a pair of helical springs 76A and 76B.

In the lower foreign body detecting mechanism 90, the entire bracket member 72 except for the portion thereof corresponding to the stand 5 is formed to have a box-like shape nearly the same as the bottom surface of the audio unit 2 and open at the bottom thereof. The central portion of the bracket member 72, corresponding to the stand 5, has the rear side thereof concaved to avoid abutment with the stand 5, which however will not be explained in detail. The bracket member 72 has formed inside the central portion thereof a narrow slit-shaped space communicating with a wide space on either side of the central portion.

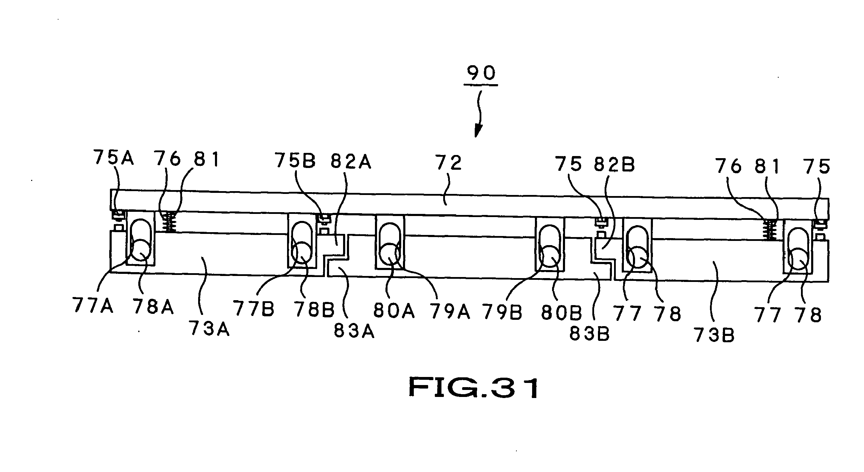

The bracket member 72 has the pair of detection switches 75 installed on the bottom of the wide lateral spaces thereof across the central portion to be opposite to positions near the longitudinal ends of each actuating member 73 which will be described in detail later. The bracket member 72 has formed in either lateral wall thereof opposite to the width a plurality of guide holes 77 that are vertical elongated holes. As shown in FIG. 31, the guide holes 77 include a pair of guide holes 77A and 77B formed in longitudinally separate positions in lateral walls of the wide lateral spaces to accommodate the actuating members 73, and a pair of guide holes 79A and 79B formed in longitudinally separate positions in the lateral walls across the narrow central space to accommodate the coupling actuating plate 74.

In the lower foreign body detecting mechanism 90, the actuating members 73 are installed in the wide lateral spaces of the bracket member 72 to be freely movable up and down with the bottom thereof being projected. The actuating members 73 are formed to have a box-like shape nearly equal in size to the bottom of a portion of the audio unit 2, projected laterally from the stand 5, and open at the top thereof. The actuating member 73 has formed integrally in positions near the longitudinal opposite ends thereof switch actuators located opposite to the aforementioned detection switches 75 at the bracket member 72. The actuating member 73 has formed on either lateral wall thereof guide pins 78A and 78B which are to be engaged in the aforementioned guide holes 77A and 77B, respectively, in the bracket member 72.

The actuating member 73 has formed integrally nearly at the center of the width, nearer to one end of the bottom, a stud pin 81 on which a helical spring 69 is secured. Further, the actuating member 73 is stepped at the one longitudinal end thereof opposite to the stud pin 81, the step forming a coupling convexity 82. It should be noted that the actuating members 73A and 73B are horizontally symmetrical with each other, the stud pins 81 are located outside the actuating members 73A and 73B and the coupling convexities 82 are formed at the lateral sides, respectively, opposite to each other, as shown in FIG. 31.

In the lower foreign body detecting mechanism 90, the coupling actuating plate 74 is formed from a rectangular sheet-like member having a height and thickness allowing itself to be accommodated in upright position in the slit formed in the narrow central space of the bracket member 72 and a length generally equal to the spacing between the aforementioned actuating members 73A and 73B. The coupling actuating plate 74 has formed in both lateral walls thereof guide pins 80A and 80B, respectively, which are to be engaged in the aforementioned guide holes 79A and 79B, respectively, in the bracket member 72. Also, the coupling actuating plate 74 has formed integrally at the longitudinal end portions thereof coupling convexities 83A and 83B, respectively, which can be engaged on the aforementioned coupling convexities 82, respectively, at the actuating member 73.

In the lower foreign body detecting mechanism 90, the bracket member 72 is fixed to the bottom of the housing of the audio unit 2, and the actuating members 73 and coupling actuating plates 74 are combined with each other in the inner spaces of the bracket member 72. In the lower foreign body detecting mechanism 90, the actuating members 73 are installed to the bracket member 72 with the guide pins 78A and 78B being engaged in the guide holes 77A and 77B, respectively, and the coupling actuating plate 74 is installed to the bracket member 72 with the guide pins 80A and 80B being engaged in the guide holes 79A and 79B, respectively. Also, in the lower foreign body detecting mechanism 90, the guide pins 78 and 80 are movable in the direction of height in the guide holes 77 and 79, respectively, and the actuating members 73 and coupling actuating plate 74 operate in the moving range of the guide pins to detect a foreign body 71.

In the lower foreign body detecting mechanism 90, the actuating members 73 are combined with the bracket member 72 with the helical springs 76 fitted on the stud pins 81 being compressed. Also, in the lower foreign body detecting mechanism 90, the actuating members 73 will be pushed downward under the resilience of the helical springs 76 and have their bottoms projected from the bracket member 72. The coupling actuating plate 74 has the coupling convexity 83 thereof engaged on the coupling convexity 82 of the actuating member 73 so that the resilience of the helical spring 76 will act on the coupling actuating plate 74 via the actuating member 73 and thus the coupling actuating plate 74 be pushed down to have the bottom thereof projected from the bracket member 72. In the lower foreign body detecting mechanism 90, the actuating members 73 being pushed down inside the bracket member 72, each of the detection switches 75 are kept in the off state.

Even when a foreign body 71 is lodged in any position on the bottom surface of the audio unit 2, the lower foreign body detecting mechanism 90 will detect the lodging of the foreign body 71 and output a detection signal to the microcomputer 26 which in turn will quickly stop the audio unit 2 from moving downward. In the lower foreign body detecting mechanism 90, if a foreign body 71 is lodged in a longitudinal position between each of the actuating members 73 and coupling actuating plate 74, the latter will make a so-called seesaw movement to detect the foreign body 71. In the lower foreign body detecting mechanism 90, each actuating member 73 and coupling actuating plate 74 are designed to have no fixed fulcrum, which permits to detect a foreign body 71 in a wide area without any dead zone.

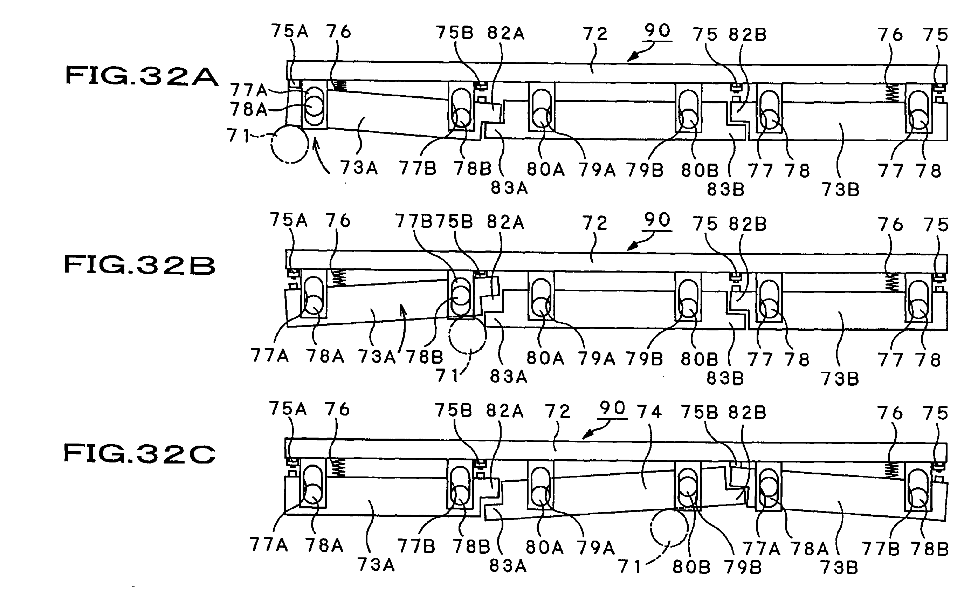

In the lower foreign body detecting mechanism 90, when the audio unit 2 is moved down with a foreign body 71 being in a position near the periphery of the audio unit 2 as shown in FIG. 32A, the actuating members 73 will be pivoted clockwise against the resilience of the helical spring 76. The actuating member 73A will be pivoted about the inner guide pin 78B to turn on the outer detection switch 75A with the outer guide pin 78A being moved upward inside the guide hole 77A. In the lower foreign body detecting mechanism 90, since only the actuating member 73A will be pivoted as above while the other actuating member 73B and coupling actuating plate 74 will not operate, so the load to the switching operation is reduced and detection can be made with a high sensitivity.

In the lower foreign body detecting mechanism 90, in case the audio unit 2 is moved down with a foreign body 71 being lodged in the vicinity of the inside of the audio unit 2 as shown in FIG. 32B, the actuating member 73A will be pivoted counterclockwise against the resilience of the helical spring 76 as indicated with an arrow in FIG. 32B. At this time, the actuating member 73A will be pivoted about the outer guide pin 78A to turn on the inner detection switch 75B with the inner guide pin 78B being moved upward inside the guide hole 77B.

Note that in the lower foreign body detecting mechanism 90, the other actuating member 73B also makes a similar seesaw movement to detect a foreign body 71 lodged in a different longitudinal position. Also in the lower foreign body detecting mechanism 90, even in case a foreign body 71 is caught in a position near the center of the actuating member 73, the latter will be pivoted about any of the guide pins 78.

In the lower foreign body detecting mechanism 90, in case the audio unit 2 is moved downward with a foreign body 71 being lodged near the center of the audio unit 2 as shown in FIG. 32C, the coupling actuating plate 74 is pivoted and also has the actuating members 73 pivoted to detect the foreign body 71. Also, in case a foreign body 71 is caught in a position to the right of the coupling actuating plate 74, for example, the coupling actuating plate 74 abutting the foreign body 71 will be pivoted about the left guide pin 80A with the right guide pin 80B being moved inside the guide hole 79B.

In the lower foreign body detecting mechanism 90, the coupling actuating plate 74 pushes up the coupling convexity 82B of the right actuating member 73B by means of the right coupling convexity 83B. The actuating member 73B will be pivoted about the outer guide pin 78B against the resilience of the helical spring 76 to turn on the inner detection switch 75B with the inner guide pin 78A being moved upward inside the guide hole 77A.

Note that although the lower foreign body detecting mechanism 90 is designed so that the narrow space will be defined in a position where the bracket member 72 is opposite to the stand 5 to accommodate the coupling actuating plate 74 and the actuating members 73 be accommodated in the wide spaces, respectively, across the narrow space, it is of course that the present invention is not limited to this design. For example, in case the spaces across the central space are so wider that it is difficult to make a large, precision actuating member 73, a coupling actuating member formed like a box similar to the actuating members 73 may be provided between the latter to detect a foreign body 71.

It should be understood by those skilled in the art that various modifications, combinations, sub-combinations and alterations may occur depending on design requirements and other factors insofar as they are within the scope of the appended claims or the equivalents thereof.

## Claims

1. An audio/display apparatus (1) comprising:
an audio unit (2) incorporating at least a speaker, recording medium loading unit, recording medium playing unit to reproduce information recorded in the recording medium and an acoustic signal processor to process an audio signal for output from the speaker;
a display unit (3) incorporating a display screen to display at least a television broadcast image and image reproduced by the recording medium playing unit and a video signal processor;
a support frame (6) to support the display unit (3) fixed thereon;
a carrier (7) having the audio unit mounted thereon and installed on the support frame (6) via a drive mechanism and guide mechanism to be movable;
a first foreign body detecting mechanism (89) provided along the entire top edge of the audio unit, opposite to at least the display unit (3), and which detects a foreign body lodged in a clearance defined between the top portion of the audio unit (2) and the display unit (3); and
a second foreign body detecting mechanism (90) provided along the entire bottom edge of the audio unit (2) to detect a foreign body caught at the bottom of the audio unit (2).

2. The apparatus (1) according to claim 1, wherein the first foreign body detecting mechanism (89) includes:
an actuating plate member (66) including a main surface portion nearly flush with the top surface of the audio unit, detection wall of which the entirety is formed from a bent portion of the main surface portion to be opposite to the display unit (3), three projecting fulcrum studs formed integrally on the inner side of the main surface portion at regular intervals along the length of the main surface portion and a switch actuator disposed the fulcrum studs and detection wall and formed integrally with the inner side of the main surface portion;
a pressure-sensitive switch sheet (67) laid between the top surface of the audio unit (2) and the main surface portion of the actuating plate member (66); and
a helical spring (69) fitted on each of the fulcrum studs to hold the actuating plate member at the top surface of the audio unit,
when a foreign body lodged between the audio unit and display unit forces the detection wall, the actuating plate member (66) being pivoted about the switch actuator against the resilience of the helical spring (69) so that the switch actuator will press the pressure-sensitive switch sheet (67) which will output a detection signal.

3. The apparatus (1) according to claim 1 or 2, wherein the second foreign body detecting mechanism (90) includes:
a channel-shaped bracket member (72) fixed over the length thereof to the bottom surface of the audio unit (2) and having a width generally approximate to that of the bottom surface;
at least a pair of actuating members (73A, 73B) provided in combination with and inside the bracket member (72), respectively, movably along its own height;
a coupling actuating plate member (74) coupling opposite lateral sides of the actuating member with each other and combined with the bracket member, respectively, freely movably along its own height and oscillably along its own width;
a pair of detection switches (75A, 75B) provided for each of the actuating members, they being provided on the bracket member, respectively, oppositely to near both the longitudinal ends of each actuating member; and
a pair of resilient members (76A, 76B) provided in inner positions in relation to the detection switches to force each of the actuating members away from the bracket member,
each of the actuating members and coupling actuating plate member being disposed across the length of the bracket member and combined with the bracket member by a support structure provided between them and the bracket member to be movable along its own height and form a pivoting fulcrums, and when pushed up by the foreign body, the actuating member making a see-saw motion to turn on any one of the detection switches which will output a detection signal.
